# EUROPEAN PATENT APPLICATION

(11) **EP 4 770 038 A1**
(43) Date of publication of application: **01.07.2026**
(21) Application number: 24867287.5
(22) Date of filing: 02.09.2024
(51) Int. Cl.: H04L 45/16

(54) **MULTICAST MESSAGE TRANSMISSION METHOD AND APPARATUS**

(30) Priority: 19.09.2023 CN 202311221767
(71) Applicant: HUAWEI TECHNOLOGIES CO., LTD., Shenzhen 518129 (CN)
(72) Inventor: LI, Fengkai, Shenzhen, Guangdong 518129 (CN); MENG, Rui, Shenzhen, Guangdong 518129 (CN); XU, Bing, Shenzhen, Guangdong 518129 (CN)
(74) Representative: Goddar, Heinz J.
(86) International application number: PCT/CN2024/116376
(87) International publication number: WO 2025/060875

(57) **Abstract**

A multicast packet transmission method and an apparatus are disclosed, and relate to the field of communication technologies. In the method, a first node may send, to a second node, first multicast routing information that includes multicast routing information of the second node and multicast routing information of a third node, and first positioning information that is for determining the multicast routing information of the second node. In this way, after receiving the first multicast routing information and the first positioning information, the second node determines, based on the first positioning information, the multicast routing information of the second node from the first multicast routing information. In this application, the first node does not need to split the first multicast routing information for the second node, to obtain the multicast routing information of the second node. In this way, a quantity of times of splitting and editing a multicast packet is reduced, and multicast packet forwarding efficiency is improved.

## Description

This application claims priority to Chinese Patent Application No. 202311221767.2, filed with the China National Intellectual Property Administration on September 19, 2023 and entitled "MULTICAST PACKET TRANSMISSION METHOD AND APPARATUS", which is incorporated herein by reference in its entirety.

### TECHNICAL FIELD

This application relates to the field of communication technologies, and in particular, to a multicast packet transmission method and an apparatus.

### BACKGROUND

Multicast means that a transmitting end sends a packet carrying same data to a plurality of specific receiving ends. In an initial implementation, the transmitting end copies data in one packet into a plurality of copies based on a quantity of the receiving ends, separately encapsulates the copies, and sends the copies to the receiving ends. This causes repeated transmission of packets on some links, reduces network resource utilization, and increases a possibility of network congestion.

To resolve the foregoing problem, it is proposed that a header of a packet sent to a first node carries multicast routing information of all child nodes of the first node in a multicast tree. After obtaining the packet, the first node splits the multicast routing information of all the child nodes carried in the packet header, to obtain multicast routing information of each child node, and edits a corresponding packet for each child node. In the foregoing process, the first node needs to split the received packet a plurality of times and edit the packet, to generate the packet to be sent to each child node. Consequently, packet forwarding performance is low.

### SUMMARY

This application provides a multicast packet transmission method and an apparatus, to resolve a problem of low packet forwarding performance.

According to a first aspect, this application provides a multicast packet transmission method. The method is applied to a first node, and the method includes: The first node determines a first multicast packet. The first multicast packet includes first positioning information, first multicast routing information, and data. The first multicast routing information includes multicast routing information of a second node and multicast routing information of a third node. The multicast routing information of the second node indicates a descendant node of the second node in a multicast tree corresponding to the data. The multicast routing information of the third node indicates a descendant node of the third node in the multicast tree. The first node sends the first multicast packet to the second node. The first positioning information is for determining the multicast routing information of the second node from the first multicast routing information. The second node and the third node are child nodes of the first node in the multicast tree, and the second node is different from the third node.

The first node sends, to the second node, the first multicast routing information that includes the multicast routing information of the second node and the multicast routing information of the third node, and the first positioning information that is for determining the multicast routing information of the second node. In this way, after receiving the first multicast routing information and the first positioning information, the second node determines, based on the first positioning information, the multicast routing information of the second node from the first multicast routing information. In this application, the first node does not need to split the first multicast routing information for the second node, to obtain the multicast routing information of the second node. In this way, a quantity of times of splitting and editing a multicast packet is reduced, and multicast packet forwarding efficiency is improved.

In a possible implementation, the first node receives a second multicast packet from a fourth node. The second multicast packet includes second multicast routing information and the data. The second multicast routing information includes multicast routing information of the first node. The multicast routing information of the first node includes the multicast routing information of the second node and the multicast routing information of the third node. The first node is a child node of the fourth node in the multicast tree. The first node determines the first multicast packet based on the second multicast packet. In this way, the first node can determine, based on the received second multicast packet without other information, the first multicast packet sent to the second node, thereby improving packet forwarding performance.

In another possible implementation, the second multicast packet further includes second positioning information. The second positioning information is for determining the multicast routing information of the first node from the second multicast routing information. In this way, in a case in which a node in the multicast tree includes one or more child nodes, a same packet structure may be used (that is, all nodes carry positioning information). In this way, using different packet encapsulation formats in the multicast tree, which affects packet forwarding efficiency, is avoided.

In another possible implementation, the multicast routing information of the first node further includes first indication information. The first indication information indicates the length of the multicast routing information of the second node. That the first node determines the first multicast packet based on the second multicast packet includes: The first node determines the first positioning information based on the first indication information, and determines the first multicast routing information based on the second multicast routing information, and the first node performs packet encapsulation on the first positioning information, the first multicast routing information, and the data, to obtain the first multicast packet. In a case in which the second node is an initial child node of the first node, the first node determines the first positioning information based on the first indication information. In this way, in a case in which the second node needs to obtain multicast routing information of a child node of the second node, the second node may directly obtain the multicast routing information based on the first positioning information, thereby reducing a quantity of times of editing a packet by an editing node, and improving multicast packet forwarding efficiency.

In another possible implementation, the multicast routing information of the first node further includes second indication information and third indication information. The second indication information indicates the length of the multicast routing information of the third node. The third indication information indicates that the first indication information is associated with the multicast routing information of the second node, and the second indication information is associated with the multicast routing information of the third node. That the first node determines the first positioning information based on the first indication information includes: The first node determines the first positioning information based on the first indication information and the third indication information. In a case in which the second node is a non-initial and non-last child node of the first node, the first node determines the first positioning information based on the first indication information and the third indication information. In this way, in a case in which the second node needs to obtain multicast routing information of a child node of the second node, the second node may directly obtain the multicast routing information based on the first positioning information, thereby reducing a quantity of times of editing a packet by an editing node, and improving multicast packet forwarding efficiency.

In another possible implementation, the multicast routing information of the first node further includes second indication information and fourth indication information. The second indication information indicates the length of the multicast routing information of the third node. The fourth indication information indicates the total length of the multicast routing information of the first node. That the first node determines the first multicast packet based on the second multicast packet includes: The first node determines the first positioning information based on the second indication information and the fourth indication information. The first node determines the first multicast routing information based on the second multicast routing information. In addition, the first node performs packet encapsulation on the first positioning information, the first multicast routing information, and the data, to obtain the first multicast packet. In a case in which the second node is a last child node of the first node, the first node determines the first positioning information based on the second indication information and the fourth indication information. In this way, in a case in which the second node needs to obtain multicast routing information of a child node of the second node, the second node may directly obtain the multicast routing information based on the first positioning information, thereby reducing a quantity of times of editing a packet by an editing node, and improving multicast packet forwarding efficiency.

In another possible implementation, that the first node determines the first multicast routing information based on the second multicast routing information includes: The first node uses the second multicast routing information as the first multicast routing information. Alternatively, the first node obtains the multicast routing information of the first node from the second multicast routing information, to obtain the first multicast routing information. In comparison with a case in which the first node splits the second multicast routing information carried in the second multicast packet, in this application, in a case in which the second multicast routing information is used as the first multicast routing information, the first node does not split the second multicast routing information carried in the second multicast packet, but directly encapsulates the second multicast routing information and forwards the second multicast routing information to the second node, thereby improving packet forwarding efficiency. In a case in which the first multicast routing information is a part of content in the second multicast routing information, the first node splits the second multicast routing information, to obtain the first multicast routing information. By completing splitting once, the first node can obtain the first multicast routing information, thereby improving the packet forwarding efficiency.

In another possible implementation, the first positioning information includes first length information. The first length information indicates the length of the multicast routing information of the second node.

The first length information may include different content. The following provides two possible examples.

Example 1: The first length information includes a first value. The first value is the length of the multicast routing information of the second node.

Example 2: The first length information includes a first value and a second value. The first value and the second value jointly represent the length of the multicast routing information of the second node. A unit length corresponding to the first value is different from a unit length corresponding to the second value.

In another possible implementation, the first positioning information further includes first location information. The first location information indicates a location of the multicast routing information of the second node in the first multicast packet.

The first location information may include different content. The following provides two possible examples.

Example 1: The first location information includes a first offset. The first offset is an offset of the location of the multicast routing information of the second node in the first multicast packet relative to a reference location in the first multicast packet.

Example 2: The first location information includes a first offset and a second offset. The first offset is an offset of a location of a first field in the first multicast packet relative to a reference location in the first multicast packet. The second offset is an offset of the location of the multicast routing information of the second node in the first multicast packet relative to the location of the first field in the first multicast packet. The first field is a field that is among a plurality of fields obtained by dividing the first multicast packet by a first unit length and that the location of the multicast routing information of the second node is in.

According to a second aspect, this application provides a first node. The node includes a processing unit and a communication unit.

The processing unit is configured to determine a first multicast packet. The first multicast packet includes first positioning information, first multicast routing information, and data. The first multicast routing information includes multicast routing information of a second node and multicast routing information of a third node. The multicast routing information of the second node indicates a descendant node of the second node in a multicast tree corresponding to the data, and the multicast routing information of the third node indicates a descendant node of the third node in the multicast tree.

The communication unit is configured to send the first multicast packet to the second node. The first positioning information is for determining the multicast routing information of the second node from the first multicast routing information. The second node and the third node are child nodes of the first node in the multicast tree, and the second node is different from the third node.

In a possible implementation, the communication unit is further configured to receive a second multicast packet from a fourth node. The second multicast packet includes second multicast routing information and the data. The second multicast routing information includes multicast routing information of the first node. The multicast routing information of the first node includes the multicast routing information of the second node and the multicast routing information of the third node. The first node is a child node of the fourth node in the multicast tree. The processing unit is specifically configured to determine the first multicast packet based on the second multicast packet.

In another possible implementation, the second multicast packet further includes second positioning information. The second positioning information is for determining the multicast routing information of the first node from the second multicast routing information.

In another possible implementation, the multicast routing information of the first node further includes first indication information. The first indication information indicates the length of the multicast routing information of the second node. The processing unit is specifically configured to determine the first positioning information based on the first indication information. The processing unit is further specifically configured to determine the first multicast routing information based on the second multicast routing information. The processing unit is further specifically configured to perform packet encapsulation on the first positioning information, the first multicast routing information, and the data, to obtain the first multicast packet.

In another possible implementation, the multicast routing information of the first node further includes second indication information and third indication information. The second indication information indicates the length of the multicast routing information of the third node. The third indication information indicates that the first indication information is associated with the multicast routing information of the second node, and the second indication information is associated with the multicast routing information of the third node. The processing unit is specifically configured to determine the first positioning information based on the first indication information and the third indication information.

In another possible implementation, the multicast routing information of the first node further includes second indication information and fourth indication information. The second indication information indicates the length of the multicast routing information of the third node, and the fourth indication information indicates the total length of the multicast routing information of the first node. The processing unit is specifically configured to determine the first positioning information based on the second indication information and the fourth indication information. The processing unit is further specifically configured to determine the first multicast routing information based on the second multicast routing information. The processing unit is further specifically configured to perform packet encapsulation on the first positioning information, the first multicast routing information, and the data, to obtain the first multicast packet.

In another possible implementation, the processing unit is specifically configured to: use the second multicast routing information as the first multicast routing information, or obtain the multicast routing information of the first node from the second multicast routing information, to obtain the first multicast routing information.

In another possible implementation, the first positioning information includes first length information. The first length information indicates the length of the multicast routing information of the second node.

The first length information may include different content. The following provides two possible examples.

Example 1: The first length information includes a first value. The first value is the length of the multicast routing information of the second node.

Example 2: The first length information includes a first value and a second value. The first value and the second value jointly represent the length of the multicast routing information of the second node. A unit length corresponding to the first value is different from a unit length corresponding to the second value.

In another possible implementation, the first positioning information further includes first location information. The first location information indicates a location of the multicast routing information of the second node in the first multicast packet.

The first location information may include different content. The following provides two possible examples.

Example 1: The first location information includes a first offset. The first offset is an offset of the location of the multicast routing information of the second node in the first multicast packet relative to a reference location in the first multicast packet.

Example 2: The first location information includes a first offset and a second offset. The first offset is an offset of a location of a first field in the first multicast packet relative to a reference location in the first multicast packet. The second offset is an offset of the location of the multicast routing information of the second node in the first multicast packet relative to the location of the first field in the first multicast packet. The first field is a field that is among a plurality of fields obtained by dividing the first multicast packet by a first unit length and that the location of the multicast routing information of the second node is in.

According to a third aspect, this application provides a communication apparatus. The communication apparatus includes a processor. The processor is connected to a memory, the memory is configured to store computer-executable instructions, and the processor executes the computer-executable instructions stored in the memory, to enable the communication apparatus to implement operation steps of the method according to the first aspect or any possible design of the first aspect.

According to a fourth aspect, this application provides a chip. The chip includes a processor and an interface. The processor is coupled to a memory through the interface, and when the processor executes a computer program or instructions in the memory, the chip is enabled to implement operation steps of the method according to the first aspect or any possible design of the first aspect.

According to a fifth aspect, this application provides a computer-readable storage medium. The computer-readable storage medium includes computer software instructions. When the computer software instructions are run on a compute device, the compute device is enabled to perform operation steps of the method according to the first aspect or any possible implementation of the first aspect.

According to a sixth aspect, this application provides a computer program product. When the computer program product is run on a compute device, the compute device is enabled to perform operation steps of the method according to the first aspect or any possible implementation of the first aspect.

For beneficial effects of the foregoing second aspect to the foregoing sixth aspect, refer to the descriptions of the first aspect or any implementation of the first aspect. Details are not described herein again. In this application, based on the implementations according to the foregoing aspects, the implementations may be further combined to provide more implementations provided that the solutions are not contradictory.

### BRIEF DESCRIPTION OF DRAWINGS

FIG. 1A is a diagram of packet multicast according to an embodiment of this application;
FIG. 1B is a diagram of a first entity topology connection and a multicast tree according to an embodiment of this application;
FIG. 2 is a diagram of a second entity topology connection and a multicast tree according to an embodiment of this application;
FIG. 3A is a diagram of another entity topology connection according to an embodiment of this application;
FIG. 3B is a diagram of multicast packet transmission between routers according to an embodiment of this application;
FIG. 4 is a diagram of a structure of a first-type multicast packet according to an embodiment of this application;
FIG. 5 is a diagram of a structure of multicast information of a node according to an embodiment of this application;
FIG. 6 is a diagram of an association relationship between a multicast routing identifier and a node according to an embodiment of this application;
FIG. 7 is a first flowchart of obtaining a multicast packet according to this application;
FIG. 8 is a flowchart of a multicast packet transmission method according to an embodiment of this application;
FIG. 9 is a diagram of a process of obtaining multicast routing information of a node through positioning information according to an embodiment of this application;
FIG. 10 is a diagram of a structure of a multicast tree according to an embodiment of this application;
FIG. 11 is a diagram of a structure of a first-type second multicast packet according to an embodiment of this application;
FIG. 12 is a diagram of a structure of a first-type first multicast packet according to an embodiment of this application;
FIG. 13 is a diagram of a structure of a second-type first multicast packet according to an embodiment of this application;
FIG. 14 is a diagram of a structure of a second-type second multicast packet according to an embodiment of this application;
FIG. 15 is a diagram of a structure of a second-type multicast tree according to an embodiment of this application;
FIG. 16 is a diagram of a structure of a third-type second multicast packet according to this application;
FIG. 17 is a diagram of multicast packet forwarding according to an embodiment of this application;
FIG. 18 is a diagram of an example of a first-type first multicast packet according to an embodiment of this application;
FIG. 19 is a diagram of an example of a second-type first multicast packet according to an embodiment of this application;
FIG. 20 is a diagram of an example of a third-type first multicast packet according to an embodiment of this application;
FIG. 21 is a diagram of an example of a fourth-type first multicast packet according to an embodiment of this application;
FIG. 22 is a diagram of an example of a fifth-type first multicast packet according to an embodiment of this application;
FIG. 23 is a diagram of an example of a sixth-type first multicast packet according to an embodiment of this application;
FIG. 24 is a diagram of an example of a seventh-type first multicast packet according to an embodiment of this application;
FIG. 25 is a diagram of a structure of a communication apparatus according to an embodiment of this application; and
FIG. 26 is a diagram of a hardware structure of a communication apparatus according to an embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In this application, the term "example", "for example", or the like represents giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

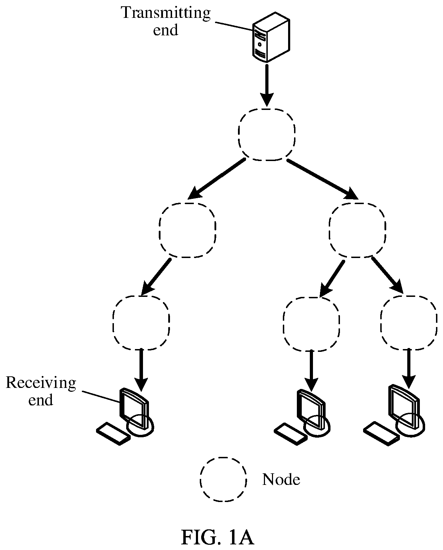

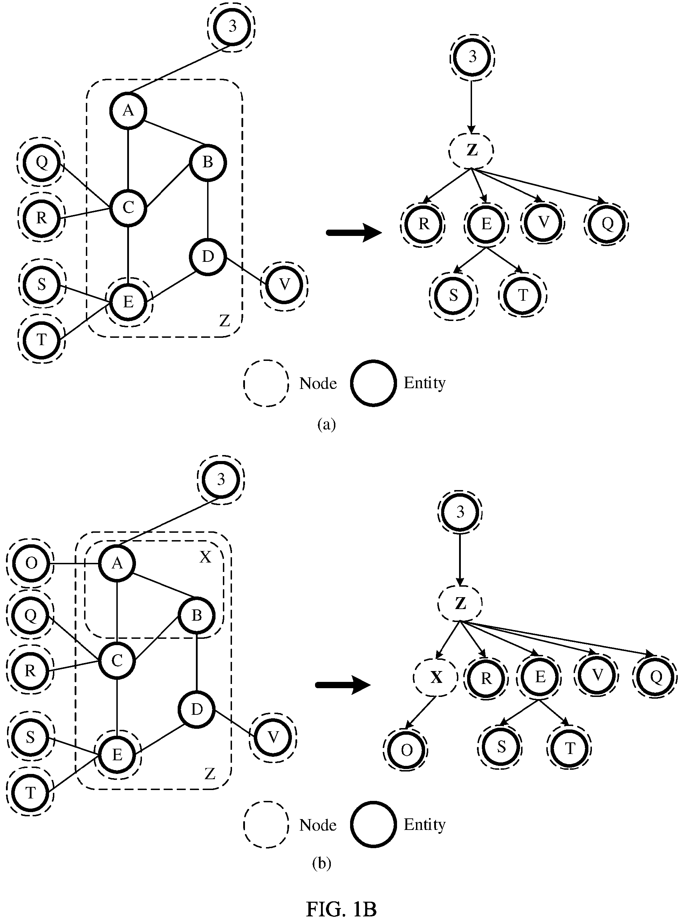

This application may be applied to a scenario in which a transmitting end needs to include same data in a packet and send the packet to a plurality of receiving ends. FIG. 1A is a diagram of packet multicast according to an embodiment of this application. As shown in FIG. 1A, a packet may be sent from a transmitting end, and reach a plurality of receiving ends through a plurality of multicast nodes (referred to as nodes for short below). The packet may be referred to as a multicast packet, and data in multicast packets transmitted between different nodes is the same. The transmitting end may be, for example, a server, and the receiving end may be, for example, a client. The node has a multicast packet forwarding capability, and may perform multicast forwarding on a received multicast packet. One node may include one or more entities. An entity may belong to only one node or a plurality of nodes. For example, FIG. 1B is a diagram of a first entity topology connection and a multicast tree according to an embodiment of this application. In (a) and (b) in FIG. 1B, the left side shows a diagram of an entity network topology, and the right side is the multicast tree. In (a) in FIG. 1B, a node Z includes a plurality of entities, where the plurality of entities are an entity A, an entity B, an entity C, an entity D, and an entity E; and a node E includes an entity, that is, the entity E. In (b) in FIG. 1B, a node X includes a plurality of entities, where the plurality of entities are the entity A and the entity B. It can be learned that the entity A and the entity B belong to both the node Z and the node X.

For ease of description, in embodiments of this application, if an entity belongs to only one node, the node and the entity use a same identifier. In this case, an address of the entity may also be described as an address of the node, and an action performed by the node is an action performed by the entity. Therefore, when an address of a node is mentioned below, the address is equivalent to an address of an entity in the node. For example, a node including only an entity A is referred to as a node A, and in this case, an address of the node A is equivalent to an address of the entity A. A node including only an entity B is referred to as a node B, and in this case, an address of the node B is equivalent to an address of the node entity B.

In embodiments of this application, an entity may also be referred to as a functional entity. An entity may be a physical entity or a virtual entity. The physical entity may be, for example, a router, a switch, a server, a host, a network adapter, a line card, a chip, a die (DIE) of a chip, a terminal (for example, a mobile terminal), or an internal module of a device. The virtual entity may be, for example, a virtual machine, a container, a process, or a thread. When the entity is the physical entity, a node may also be referred to as a multicast device.

To make the method provided in this application clearer, some concepts in this application are first briefly described.

### 1. Multicast tree

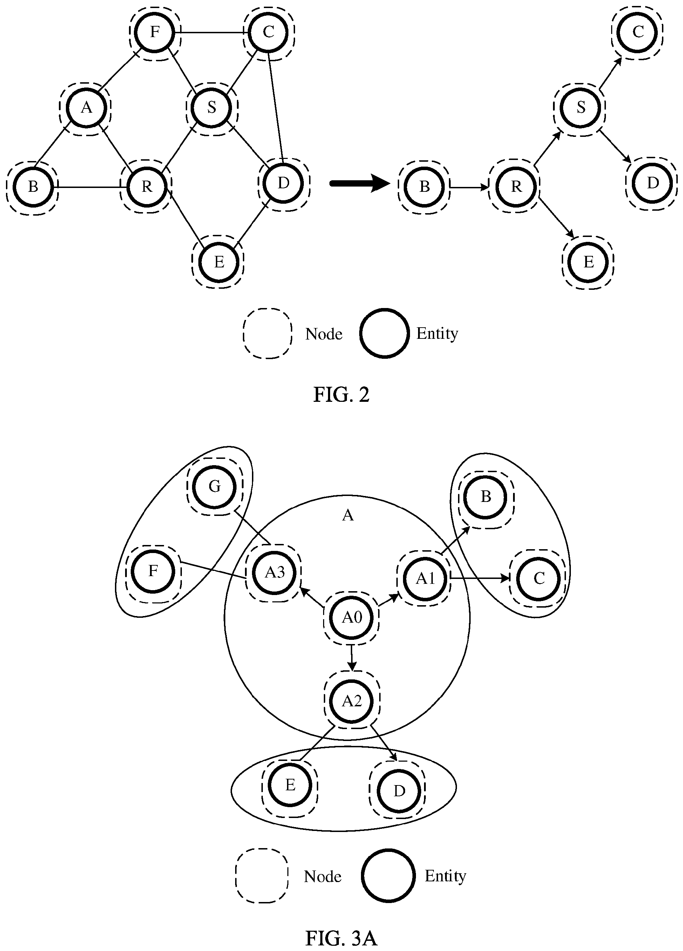

A multicast tree is a path, from a source node to all destination nodes, generated through a routing protocol (for example, protocol independent multicast (protocol independent multicast, PIM), an interior gateway protocol (interior gateway protocol, IGP)), or another method (for example, manual configuration or controller calculation) and based on specific network topology and a combination of the source node and the destination nodes. The path is a tree structure that uses the source node as a root node and the destination nodes as leaf nodes, and is referred to as a multicast tree. The multicast tree is also referred to as a multicast distribution tree (multicast distribution tree, MDT). For example, FIG. 2 is a diagram of a second entity topology connection and a multicast tree according to an embodiment of this application. As shown in FIG. 2, the left side shows an entity network topology diagram. If a source node is a node B, and destination nodes are a node C, a node D, and a node E, for an example of a multicast tree generated by combining the source node and the destination nodes, refer to the right side in FIG. 2.

A transmitting end and/or a receiving end may be nodes/a node in the multicast tree, or may not be nodes/a node in the multicast tree. If the transmitting end and/or the receiving end are nodes/a node in the multicast tree, the source node may be the transmitting end, and the destination node may be the receiving end. For ease of description, unless otherwise specified, in embodiments of this application, an example in which the transmitting end and the receiving end are nodes in the multicast tree is used to describe the method provided in embodiments of this application. If the receiving end is not a node in the multicast tree, when data reaches the leaf node, the leaf node sends the received data to a receiving end connected to the leaf node.

In addition, a module other than a network adapter in a server may be considered as a node (assuming that the node is a node a), and the network adapter in the server may be considered as another node (assuming that the node is a node b). In this case, the node b may be considered as a child node of the node a. A module other than a line card in a router may be considered as a node (assuming that the node is a node c), and the line card in the router may be considered as another node (assuming that the node is a node d). In this case, the node d may be considered as a child node of the node c. For example, FIG. 3A is a diagram of another entity topology connection according to an embodiment of this application. As shown in FIG. 3A, A is a router, a node A0 in FIG. 3A is a module other than a line card in the router, and a node A1, a node A2, and a node A3 are three line cards in the router. A may separately send a multicast packet to a node B, a node C, a node D, a node E, a node F, and a node G through interfaces on the three line cards. In this case, the node A1, the node A2, and the node A3 may be child nodes of the node A0. A may alternatively be a server. In this case, the node A1, the node A2, and the node A3 are three network adapters in the server, and A may separately send a multicast packet to the node B, the node C, the node D, the node E, the node F, and the node G through network ports on the three network adapters.

### 2. Child node

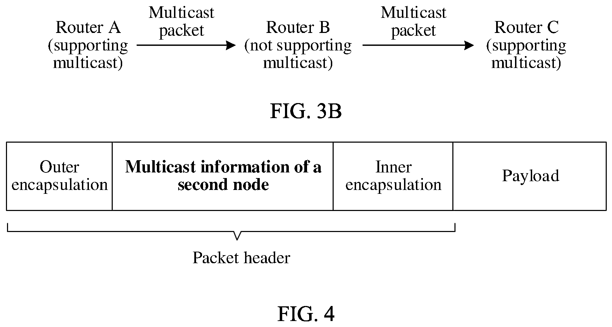

A child node of a node refers to a node that a packet of the node in a multicast tree can reach through one-hop multicast (that is, multicast forwarding is performed only once). The one-hop multicast refers to searching a multicast forwarding table once. For example, in FIG. 2, a node R is a child node of a node B, a node S is a child node of the node R, and a node E is a child node of the node R. In addition, if a multicast packet that is sent by a node that supports multicast in the multicast tree passes through one or more nodes that do not support multicast, and reaches another node that supports multicast in the multicast tree, the latter node that supports multicast is a child node of the former node that supports multicast, that is, the former node that supports multicast reaches the latter node that supports multicast through one-hop multicast. For example, FIG. 3B is a diagram of multicast packet transmission between routers according to an embodiment of this application. As shown in FIG. 3B, a router A and a router C are routers that support multicast, and a router B is a router that does not support multicast. In this case, the router A sends a multicast packet to the router C through the router B, and both the router A and the router C are nodes in a multicast tree. In this case, the router C is a child node of the router A.

When a node has no child node, the node is referred to as a leaf node. When a child node of a node is a leaf node of a multicast tree, the child node may be referred to as a leaf child node of the node. When a child node of a node is not a leaf node of a multicast tree, the child node may be referred to as a non-leaf child node of the node.

In the descriptions of this application, unless otherwise specified, a child node of a node mentioned below in this application is a child node of the node in a multicast tree. The child node may also have another name, for example, a multicast child node. This is not limited in this application.

In some possible examples, a node to which an entity belongs may be a child node of another node to which the entity belongs. For example, in (b) in FIG. 1B, a node X to which an entity A (or an entity B) belongs is a child node of a node Z to which the entity A (or the entity B) belongs. Certainly, a node to which an entity belongs may alternatively not be a child node of another node to which the node belongs.

### 3. Brother node

If a node has a plurality of child nodes, the plurality of child nodes are brother nodes of each other. For example, in a diagram on the right side of FIG. 2, a node R has a child node S and a child node E. In this case, the child node S and the child node E are brother nodes of each other.

### 4. Descendant node

A child node of a node, a child node of the child node, and so forth may all be referred to as descendant nodes of the node. For example, in a diagram on the right side of FIG. 2, descendant nodes of a node B include a child node (that is, a node R) of the node B, child nodes (that is, a node E and a node S) of the node R, and child nodes (that is, a node C and a node D) of the node S. In other words, the descendant nodes of the node B include the node R, the node E, the node S, the node C, and the node D.

### 5. Potential child node

A potential child node of a node refers to a node that a packet of the node can reach through one-hop multicast. For example, a node R and a node A in FIG. 2 are both potential child nodes of a node B, and a node F, the node R, a node C, and a node D are all potential child nodes of a node S. It may be understood that a potential child node of a node includes a child node of the node in a multicast tree. When the potential child node of the node is located in the multicast tree, the potential child node is the child node of the node in the multicast tree. The potential child node may also have another name, for example, a multicast object or a candidate child node. This is not limited in this application.

### 6. Unicast packet and multicast packet

A unicast packet and a multicast packet have two definitions, and the following separately describes the two definitions.

A first definition of the unicast packet and the multicast packet is described as follows.

Packets are classified based on behavior of processing the packets by a node. In this case, both the unicast packet and the multicast packet are for the node in embodiments of this application, and whether a packet is the unicast packet or the multicast packet is relative. Details are as follows.

For a node, if a received packet does not include any multicast routing information that the node needs to process or does not include any multicast routing information, the node does not need to perform multicast forwarding on the packet (or does not need to search a multicast forwarding table), but performs unicast forwarding (or uses a unicast encapsulation destination address to search the unicast forwarding table for forwarding) based on unicast encapsulation in the packet or consumes the packet (that is, the node processes the packet and does not need to forward the packet). In this case, the packet is the unicast packet for the node.

For a node, if a received packet includes multicast routing information, and the node needs to process the multicast routing information, that is, needs to perform multicast forwarding based on the multicast routing information (or needs to search a multicast forwarding table), the packet is the multicast packet for the node.

For example, a node A and a node B have a topology connection, and the node B and a node C have a topology connection. A packet sent by the node A to the node C can reach the node C only by passing through the node B. If the packet includes multicast routing information and unicast encapsulation, and a destination address of the unicast encapsulation is an address of the node C, the node B needs to forward the packet to the node C based on the unicast encapsulation, and the node C needs to forward the packet based on the multicast routing information. In this case, the packet is a unicast packet for the node B, and a multicast packet for the node C.

For another example, a node A and a node B have a topology connection, and the node A sends a packet to the node B. The packet does not include multicast routing information, but includes unicast encapsulation, and a destination address of the unicast encapsulation is an address of the node B. In this case, the packet is a unicast packet for the node B.

A second definition of the unicast packet and the multicast packet is described as follows.

Packets are classified based on structures of the packets. Specifically, a packet whose outermost header is a unicast header is the unicast packet, and a packet whose outermost header is a multicast header is the multicast packet. An IP header whose destination IP address is a unicast address is the unicast header, and a media access control (media access control, MAC) header whose destination MAC address is the unicast address is also the unicast header. An IP header whose destination IP address is a multicast address is the multicast header, and a MAC header whose destination MAC address is the multicast address is also the multicast header. Multicast information in embodiments of this application is also the multicast header.

Based on the foregoing two definitions of the unicast packet and the multicast packet, to make the method provided in embodiments of this application clearer, the first definition is used in embodiments of this application to describe the method provided in embodiments of this application. When the second definition is used in embodiments of this application, whether a packet is the unicast packet or the multicast packet may be determined based on a specific structure of the packet. For example, in the following description, a first node sends a first multicast packet to a second node. If an outermost header of the first multicast packet is a unicast header, the first multicast packet may be described as the unicast packet when the second definition is used for description.

The unicast encapsulation in the packet in embodiments of this application may be Internet Protocol (internet protocol, IP) version 4 (IPv4 for short) unicast encapsulation, IP version 6 (IPv6 for short) unicast encapsulation, or any other possible encapsulation form. In embodiments of this application, the unicast encapsulation in any possible form may be performed on a packet that includes the multicast routing information, or the unicast encapsulation may not be performed. The unicast encapsulation of the packet enables the packet to pass through a network between two nodes in a unicast manner (in other words, to be transmitted between the two nodes). The multicast routing information mentioned in the explanations of the unicast packet and the multicast packet is multicast routing information defined below in this application.

In some possible examples, when a multicast packet is an IP packet, and a destination IP address in an IP header of the multicast packet is a unicast address, the IP header of the multicast packet is unicast encapsulation of the multicast packet. If the multicast packet in embodiments of this application is an IP packet, in the descriptions of this application, a destination address refers to a destination IP address.

In the following descriptions of this application, if a node receives a multicast packet and the multicast packet is an IP packet, the node first determines whether a destination address in an IP header of the multicast packet is an address of the node. If the destination address in the IP header of the multicast packet is the address of the node, the node parses multicast information after the IP header of the multicast packet, and forwards the multicast packet based on the multicast information. In a process in which the node sends the multicast packet to another node, the node determines multicast information and data that need to be sent to the another node, determines a next-hop address (that is, an address of the another node), fills a destination address field in the IP header with the address of the another node, encapsulates, in the IP header, the multicast information and the data that are sent to the another node, to obtain a multicast packet to be sent to the another node, and then sends the multicast packet to the another node. For brevity, this process is not described in detail in each step below in this application, and is uniformly described herein. Details are not described below again.

For data in the multicast packet, the data is also different for different parts in the multicast packet. Specifically, for a specific part of the multicast packet, the data is a part after the specific part of the multicast packet. For example, FIG. 4 is a diagram of a structure of a first-type multicast packet according to an embodiment of this application. As shown in FIG. 4, multicast information may be carried in a packet header. For outer encapsulation, data is a part after the outer encapsulation (that is, "multicast information of a second node+inner encapsulation+payload (payload)"). For the multicast information of the second node, data is a part after the multicast information of the second node (that is, "inner encapsulation+payload"). For the inner encapsulation, data is a part after the inner encapsulation (that is, "payload"). The data mentioned in embodiments of this application is for multicast information in a multicast packet. For example, the data in the multicast packet shown in FIG. 4 is "inner encapsulation+payload".

The foregoing briefly describes some concepts in this application.

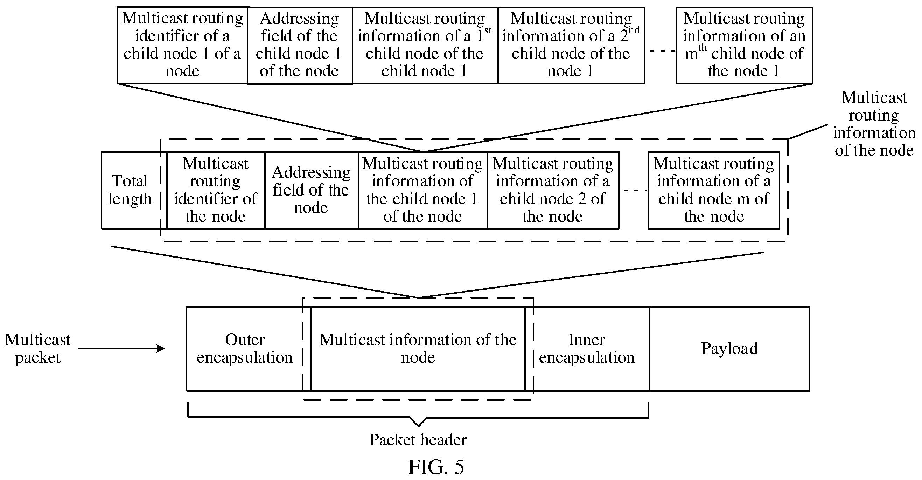

FIG. 5 is a diagram of a structure of multicast information of a node according to an embodiment of this application. As shown in FIG. 5, a node may include multicast information of the node in a packet header of a multicast packet. The multicast information of the node may include the total length of multicast routing information of the node and the multicast routing information of the node. The multicast routing information of the node includes: a multicast routing identifier (Multicast Routing ID, MRID) of the node, an addressing field of the node, and multicast routing information of a child node of the node. The multicast routing information of the child node of the node indicates a descendant node of the child node of the node in a multicast tree determined based on data.

### 1. MRID of a node

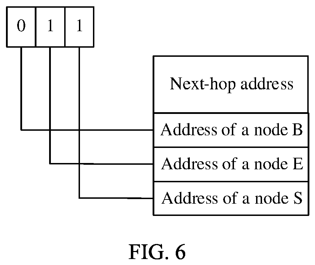

The MRID of the node is used to determine a child node of the node in a multicast tree. The MRID may be described by using a bit (bit) sequence. In this case, the node needs to send a multicast packet to a child node corresponding to a bit whose value is 1 in the MRID. In the multicast tree shown in FIG. 2, a multicast routing identifier of the node R is 011. The multicast routing identifier of the node R indicates that the node R needs to forward a multicast packet to the node S and the node E. FIG. 6 is a diagram of an association relationship between a multicast routing identifier and a node according to an embodiment of this application.

**Table 1**

| No. | Multicast routing identifier (011) of a node R | Next-hop address |
|---|---|---|
| 1 | 0 (corresponding to a 1^{st} bit) | Node B |
| 2 | 1 (corresponding to a 2^{nd} bit) | Node S |
| 3 | 1 (corresponding to a 3^{rd} bit) | Node E |

### 2. Addressing field of a node.

The addressing field of the node is used to determine the length of multicast routing information of a non-leaf child node of the node. For example, an addressing field of the node R is used to determine the length of multicast routing information of the node S.

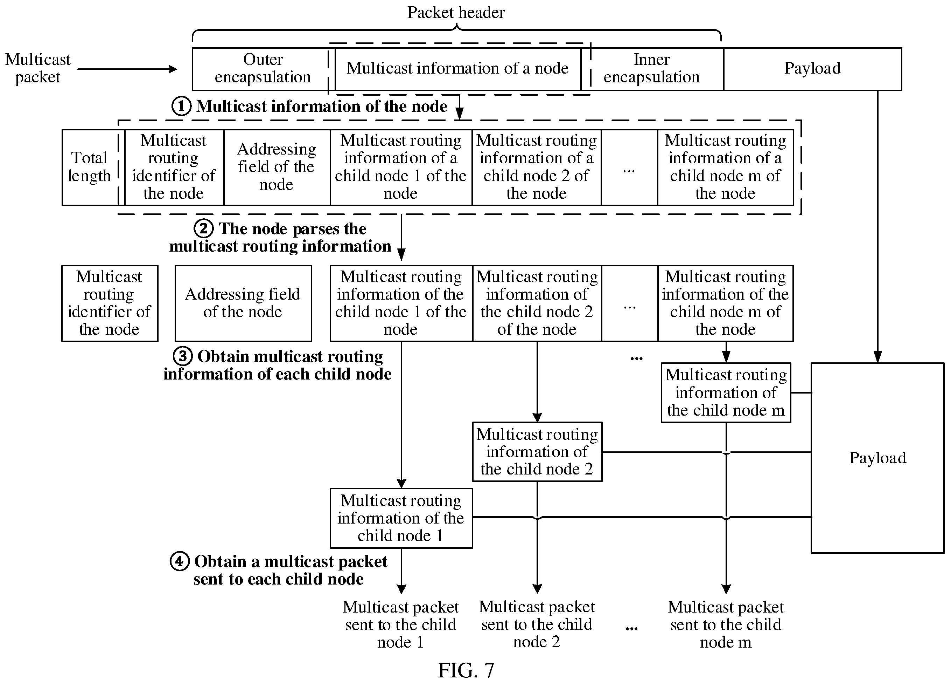

The node receives a multicast packet intended to be forwarded, where the multicast packet intended to be forwarded includes: the total length of multicast routing information of the node, an MRID, the addressing field, and multicast routing information of a child node of the node. The node obtains, based on the total length, the MRID, the addressing field, and the multicast routing information of the child node of the node that are carried in the multicast packet intended to be forwarded, multicast routing information of a child node, of the node, to which the multicast packet intended to be forwarded needs to be sent, and encapsulates and generates a to-be-forwarded multicast packet based on the multicast routing information of the child node, of the node, to which the multicast packet intended to be forwarded needs to be sent. A detailed process is described as follows. FIG. 7 is a first flowchart of obtaining a multicast packet according to this application. As shown in FIG. 7, the process includes the following step ① to step ④.

Step ①: A node loads (loads) a multicast packet intended to be forwarded, to obtain multicast information of the node.

Step ②: The node parses the multicast information, to obtain multicast routing information. The multicast routing information includes: the total length, an MRID, an addressing field, and multicast routing information of all child nodes of the node.

Step ③: The node obtains multicast routing information of each child node of the node based on the total length, the MRID, the addressing field, and the multicast routing information of all the child nodes of the node.

Step ④: The node separately encapsulates the multicast routing information of each child node of the node, to obtain a multicast packet sent to each child node of the node, and obtain to-be-forwarded multicast packets.

In the foregoing process, the node needs to obtain, based on the total length, the MRID, the addressing field, and the multicast routing information of all the child nodes of the node, the multicast routing information corresponding to each child node of the node, and perform encapsulation based on the multicast routing information corresponding to each child node, to obtain the multicast packet sent to each child node. In this way, in a case in which the node includes two or more child nodes, the node needs to edit and split multicast routing information of all child nodes of the node a plurality of times to obtain multicast routing information of each child node, and encapsulate and form a multicast packet sent to each child node. Splitting is performed a plurality of times, which takes long time, and affects multicast packet forwarding efficiency.

To resolve the foregoing problem, this application provides a multicast packet transmission method. A principle of implementing multicast packet transmission in the method is described as follows: A node determines a multicast packet intended to be forwarded. A packet header of the data packet intended to be forwarded carries: positioning information for positioning multicast routing information of a node that intends to receive the data packet intended to be forwarded, and multicast routing information and data of the node. The multicast routing information of the node includes multicast routing information of a plurality of child nodes of the node. The node forwards the multicast packet intended to be forwarded to the node that intends to receive the data packet intended to be forwarded.

A difference between the multicast packet transmission method provided in this application and the method described in FIG. 7 lies in that: The node encapsulates, in the packet header of the multicast packet, the multicast routing information of the plurality of child nodes of the node and positioning information for determining multicast routing information of a child node to which the multicast packet intends to be sent, and sends the multicast packet to the child node to which the multicast packet intends to be sent. In this case, after receiving the multicast packet, the child node determines, based on the positioning information for determining the multicast routing information of the child node, the multicast routing information of the child node from the multicast routing information of the plurality of child nodes. The following describes the method in detail.

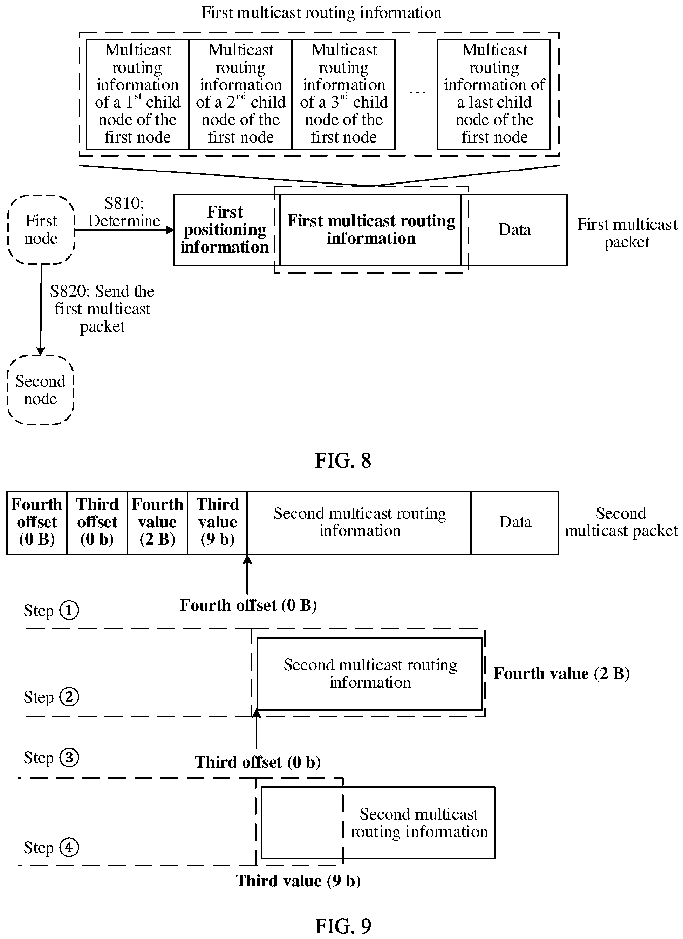

FIG. 8 is a flowchart of a multicast packet transmission method according to an embodiment of this application. The method is applied to a first node. The first node may be a router, a switch, a server, a host, a network adapter, a line card, a chip, a die (DIE) of a chip, a terminal (for example, a mobile terminal), an internal module of a device, a virtual machine, a container, a process, a thread, or the like. The method includes the following S810 and S820.

S810: The first node determines a first multicast packet.

The first multicast packet includes first positioning information, first multicast routing information, and data. The first multicast routing information includes multicast routing information of a plurality of child nodes of the first node in a multicast tree. For example, the first multicast routing information includes multicast routing information of all child nodes of the first node in the multicast tree. For example, the first multicast information includes multicast routing information of a 1^{st} child node of the first node, multicast routing information of a 2^{nd} child node of the first node, multicast routing information of a 3^{rd} child node of the first node, to multicast routing information of a last child node of the first node. Multicast routing information of a node indicates a descendant node of the node in a multicast tree corresponding to the data. In some examples, the 1^{st} child node of the first node may also be referred to as an initial child node, and a child node, between the initial child node and the last child node, in child nodes of the first node may also be referred to as an intermediate child node of the first node.

Content included in the first multicast routing information is separately described based on a case in which the first node includes one child node or a plurality of child nodes in the multicast tree.

In a first possible case, the first node includes one child node in the multicast tree.

The child node of the first node in the multicast tree is a 1^{st} child node. In this case, the first multicast routing information includes multicast routing information of the 1^{st} child node. The multicast routing information of the 1^{st} child node indicates a descendant node of the 1^{st} child node in the multicast tree corresponding to the data.

In a second possible case, the first node includes a plurality of child nodes in the multicast tree.

The child nodes of the first node in the multicast tree are a 1^{st} child node, a 2^{nd} child node, to an N^{th} child node. N is a natural number greater than or equal to 3. In this case, the first multicast routing information includes: multicast routing information of the 1^{st} child node, multicast routing information of the 2^{nd} child node, to multicast routing information of the N^{th} child node. The multicast routing information of the 1^{st} child node, the multicast routing information of the 2^{nd} child node, to the multicast routing information of the N^{th} child node respectively indicate a descendant node of the 1^{st} child node, a descendant node of the 2^{nd} child node, to a descendant node of the N^{th} child node in the multicast tree corresponding to the data.

For example, the child nodes of the first node in the multicast tree include a second node and a third node. In this case, the first multicast routing information includes multicast routing information of the second node and multicast routing information of the third node. The multicast routing information of the second node indicates a descendant node of the second node in the multicast tree. The multicast routing information of the third node indicates a descendant node of the third node in the multicast tree.

Optionally, the child nodes of the first node in the multicast tree further includes a fifth node. In this case, the first multicast routing information further includes multicast routing information of the fifth node. The multicast routing information of the fifth node indicates a descendant node of the fifth node in the multicast tree.

In a possible case, the first positioning information includes first length information. The first length information indicates the length of the multicast routing information of the second node. The first length information may be represented by using at least one value. For example, a first value represents the length of the multicast routing information of the second node. For another example, a first value and a second value jointly represent the length of the multicast routing information of the second node. The following provides examples in which the first length information is represented by using one value or two values.

### Example 1: The first length information is represented by using the first value.

In this case, the first length information includes the first value. The first value is the length of the multicast routing information of the second node. In this case, the first value may be in a unit of bit (bit), byte (Byte), kilobyte (kiloByte), or the like. For example, the first value is 7 bits. In this case, it indicates that the multicast routing information of the second node is 7 bits long. The first value may be carried in a field of the first multicast packet. For example, in the first multicast packet, an lb field is used to carry the first value. Based on an actual application requirement, in the first multicast packet, another field may alternatively be used to carry the first value. This is not limited in this application.

### Example 2: The first length information is represented by using the first value and the second value.

In this case, the first length information includes the first value and the second value. The first value and the second value jointly represent the length of the multicast routing information of the second node. A unit length corresponding to the first value is different from a unit length corresponding to the second value. In this case, any two different units may be selected for the first value and the second value from units such as bit (bit), byte (Byte), and kilobyte (kiloByte). For example, the first value is 4 bits, and the second value is 1 byte. In this case, it indicates that the length of the multicast routing information of the second node is less than 1 byte and is 4 bits. The first value and the second value may be respectively carried in different fields of the first multicast packet. For example, in the first multicast packet, an lb field is used to carry the first value, and an LB field is used to carry the second value. Based on an actual application requirement, in the first multicast packet, one or more other fields may alternatively be used to carry the first value and the second value. This is not limited in this application.

The foregoing provides examples in which the first value independently represents the length of the multicast routing information of the second node, or the first value and the second value jointly represent the length of the multicast routing information of the second node. In actual application, three or more values in different units may jointly represent the length of the multicast routing information of the second node as required. For example, the first value, the second value, and a third value jointly represent the length of the multicast routing information of the second node. This is not limited in this application.

In a possible case, the first positioning information carried in the first multicast packet further includes first location information. The first location information indicates a location of the multicast routing information of the second node in the first multicast packet. For example, the first location information indicates a start location of the multicast routing information of the second node in the first multicast packet. For another example, the first location information indicates an end location of the multicast routing information of the second node in the first multicast packet. The first location information may include at least one offset. The following provides two possible examples.

### Example 1: The first location information includes a first offset.

In this case, the first location information includes the first offset. The first offset is an offset of the start location or the end location of the multicast routing information of the second node in the first multicast packet relative to a reference location in the first multicast packet. The reference location may be predefined. For example, the reference location is a start location or an end location of the first positioning information in the first multicast packet. That the reference location is the end location of the first positioning information in the first multicast packet, and the first offset is 12 bits is used as an example. In this case, the start location of the multicast routing information of the second node in the first multicast packet is a location that is offset by 12 bits starting from the end location of the first positioning information in the first multicast packet. For another example, the reference location is a start location or an end location of an addressing field in the first multicast packet. That the reference location is the end location of the addressing field in the first multicast packet, and the first offset is 12 bits is used as an example. In this case, the start location of the multicast routing information of the second node in the first multicast packet is a location that is offset by 12 bits starting from the end location of the addressing field in the first multicast packet. The first offset may be carried in a field of the first multicast packet. For example, in the first multicast packet, an ob field is used to carry the first offset. Based on an actual application requirement, in the first multicast packet, another field may alternatively be used to carry the first offset. This is not limited in this application.

### Example 2: The first location information includes a first offset and a second offset.

In this case, the first location information includes the first offset and the second offset. The first offset is an offset of a start location or an end location of a first field in the first multicast packet relative to a reference location in the first multicast packet. The second offset is an offset of the start location or the end location of the multicast routing information of the second node in the first multicast packet relative to the start location or the end location of the first field in the first multicast packet. The first field is a field that is among a plurality of fields obtained by dividing the first multicast packet by a first unit length and that the start location or the end location of the multicast routing information of the second node is in. The reference location may be predefined. For example, the reference location is a start location or an end location of the first positioning information in the first multicast packet. That the reference location is the end location of the first positioning information in the first multicast packet, the first offset is 4 bits, and the second offset is 1 byte is used as an example. In this case, the start location of the multicast routing information of the second node in the first multicast packet is a location that is offset by 12 (that is, 1 * 8 + 4) bits starting from the end location of the first positioning information in the first multicast packet. For another example, the reference location is a start location or an end location of an addressing field in the first multicast packet. That the reference location is the end location of the addressing field in the first multicast packet, the first offset is 4 bits, and the second offset is 1 byte is used as an example. In this case, the start location of the multicast routing information of the second node in the first multicast packet is a location that is offset by 12 (that is, 1 * 8 + 4) bits starting from the end location of the addressing field in the first multicast packet. The first offset and the second offset may be carried in different fields of the first multicast packet. For example, in the first multicast packet, an ob field is used to carry the first offset, and an OB field is used to carry the second offset. Based on an actual application requirement, in the first multicast packet, other fields may alternatively be used to carry the first offset and the second offset. This is not limited in this application.

The foregoing provides an example in which the first offset represents the location of the multicast routing information of the second node in the first multicast packet, or the first offset and the second offset jointly represent the location of the multicast routing information of the second node in the first multicast packet. Based on an actual application requirement, three or more offsets may jointly represent the location of the multicast routing information of the second node in the multicast packet. This is not limited in this application.

The foregoing describes content included in the first multicast packet and main content of the first positioning information included in the first multicast packet. The following describes a process in which the first node forms the first multicast packet based on a received multicast packet.

In a possible case, the first node receives a second multicast packet sent by a fourth node. The second multicast packet includes second multicast routing information and the data. The second multicast routing information includes multicast routing information of the first node. The first node is a child node of the fourth node in the multicast tree corresponding to the data. The first node determines the first multicast packet based on the received second multicast packet.

In a possible case, the second multicast packet further includes second positioning information. The second positioning information is for determining the multicast routing information of the first node from the second multicast routing information.

An example in which the second positioning information includes two offsets and two values is used to describe a process in which the first node determines the multicast routing information of the first node from the second multicast routing information based on the second positioning information. The process is specifically described as follows.

The second positioning information includes a third offset, a fourth offset, a third value, and a fourth value. The third offset and the fourth offset indicate a location of the multicast routing information of the first node in the second multicast packet, and the third value and the fourth value indicate the length of the multicast routing information of the first node in the second multicast packet. It may be understood that the third offset and the fourth offset may indicate a start location, an end location, and the like of the multicast routing information of the first node in the second multicast packet. For ease of description, the following uses an example in which the third offset and the fourth offset indicate the start location of the multicast routing information of the first node in the second multicast packet, the fourth offset and the fourth value are in units of byte (B), and the third offset and the third value are in units of bit (b). FIG. 9 is a diagram of a process of obtaining multicast routing information of a node through positioning information according to an embodiment of this application. As shown in FIG. 9, a process in which a first node determines, based on a third offset, a fourth offset, a third value, and a fourth value that are included in second positioning information, multicast routing information of the first node from second multicast routing information includes the following steps ① to ④.

Step ①: The first node is offset starting from a reference location by the fourth offset, to obtain a first offset location. For example, if the fourth offset is 0 bytes, the first node is offset starting from the reference location by 0 bytes, to obtain an offset location 1.

Step ②: The first node obtains, starting from the first offset location, content whose length is the fourth value in a second multicast packet. For example, if the fourth value is 2 bytes, the first node obtains, starting from the offset location 1, content whose length is 2 bytes in the second multicast packet.

Step ③: The first node is offset starting from the first offset position by the third offset, to obtain a second offset location, where the second offset location is a start location of the multicast routing information of the first node. For example, if the third offset is 0 bits, the first node is offset starting from the offset location 1 by 0 bits, to obtain an offset location 2, where the offset location 2 is the start location of the multicast routing information of the first node.

Step ④: The first node obtains, starting from the second offset location, content whose length is the third value from the content whose length is the fourth value, where the content whose length is the third value is content of the multicast routing information of the first node. For example, if the third value is 9 bits, the first node obtains, starting from the offset location 2, content whose length is 9 bits from the content whose length is 2 bytes. The content whose length is 9 bits is the multicast routing information of the first node.

In this way, in a case in which the fourth node includes one child node (the first node), and in a case in which the first node includes a plurality of child nodes (for example, a second node and a third node), multicast packets have same encapsulation formats, and all carry positioning information. In this way, using different packet encapsulation formats in the multicast tree, which affects packet forwarding efficiency, is avoided.

Optionally, the fourth node may further include another child node in the multicast tree. For example, child nodes of the fourth node in the multicast tree further include a sixth node and a seventh node. In this case, the second multicast routing information includes: the multicast routing information of the first node, multicast routing information of the sixth node, and multicast routing information of the seventh node. In other words, the first node has brother nodes in the multicast tree: the sixth node and the seventh node. In this case, the second positioning information is for determining the multicast routing information of the first node from the multicast routing information of the first node, the multicast routing information of the sixth node, and the multicast routing information of the seventh node that are included in the second multicast routing information.

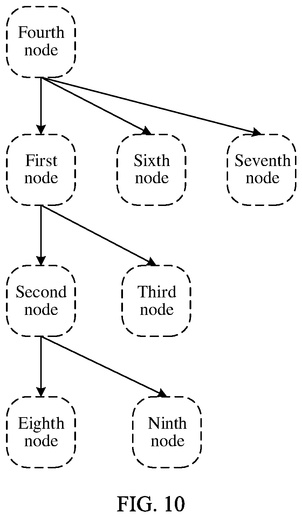

FIG. 10 is a diagram of a structure of a multicast tree according to an embodiment of this application. As shown in FIG. 10, a parent node of a first node in a multicast tree is a fourth node, and brother nodes of the first node in the multicast tree include a sixth node and a seventh node. Child nodes of the first node in the multicast tree include a second node and a third node. Child nodes of the second node in the multicast tree include an eighth node and a ninth node. Based on different locations of multicast routing information of the second node in a second multicast packet, manners in which the first node encapsulates and forms the second multicast packet into a first multicast packet are also different. The following provides descriptions in different cases.

Case A: The location of the multicast routing information of the second node in the second multicast packet is before a location of multicast routing information of the third node in the second multicast packet. In this case, the second node may also be referred to as an initial child node of the first node.

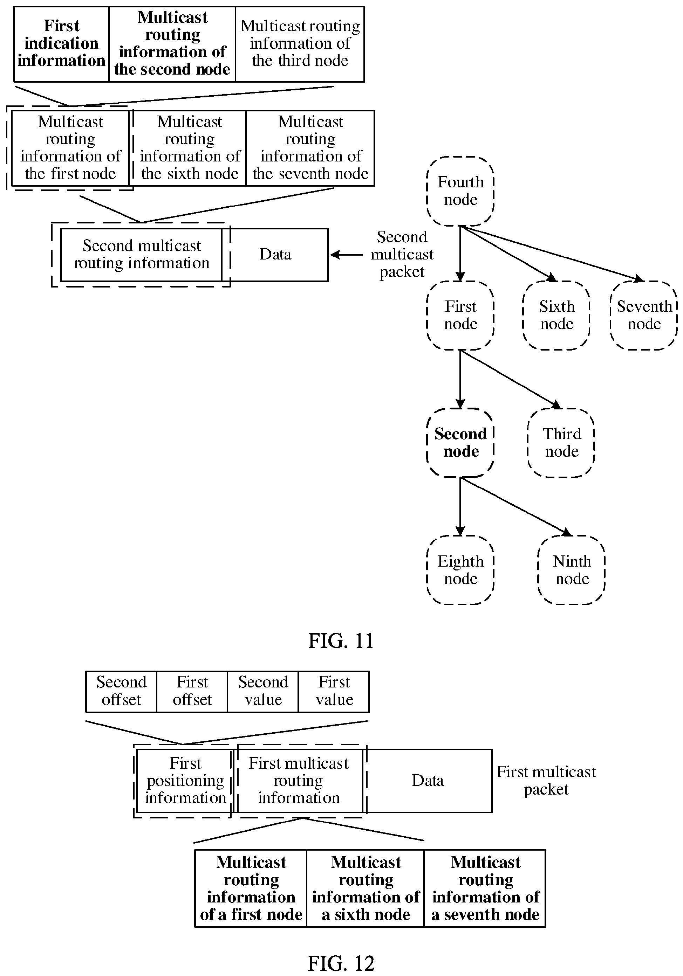

FIG. 11 is a diagram of a structure of a first-type second multicast packet according to an embodiment of this application. As shown in FIG. 11, the second multicast packet includes second multicast routing information and data. The second multicast routing information includes: multicast routing information of a first node, multicast routing information of a sixth node, and multicast routing information of a seventh node. The multicast routing information of the first node includes: first indication information, multicast routing information of a second node, and multicast routing information of a third node. The first indication information indicates the length of the multicast routing information of the second node. The first indication information may be carried in an addressing field of the second multicast packet. A process in which the first node determines a first multicast packet based on the second multicast packet includes the following step ① to step ③.

Step ①: The first node determines first multicast routing information based on the second multicast routing information.

That the first node determines the first multicast routing information based on the second multicast routing information includes the following Case 1 and Case 2.

Case 1: The first node uses the second multicast routing information as the first multicast routing information.

The first node uses the multicast routing information of the first node, the multicast routing information of the sixth node, and the multicast routing information of the seventh node as the first multicast routing information. In other words, the first multicast routing information includes: the multicast routing information of the first node, the multicast routing information of the sixth node, and the multicast routing information of the seventh node. The multicast routing information of the first node includes the multicast routing information of the second node and the multicast routing information of the third node. In this case, a current node (the first node) does not strip multicast routing information of brother nodes (the sixth node and the seventh node) of the current node, and directly sends the multicast routing information of the brother nodes (the sixth node and the seventh node) to a child node (the second node) of the current node.

Case 2: The first node obtains the multicast routing information of the first node from the second multicast routing information, to obtain the first multicast routing information.

The first node determines the multicast routing information of the first node from the multicast routing information of the first node, the multicast routing information of the sixth node, and the multicast routing information of the seventh node that are included in the second multicast routing information, and uses the multicast routing information of the first node as the first multicast routing information. In other words, the first multicast routing information includes the multicast routing information of the first node. The multicast routing information of the first node includes the multicast routing information of the second node and the multicast routing information of the third node. In this case, a current node (the first node) strips multicast routing information of brother nodes (the sixth node and the seventh node) of the current node, and sends multicast routing information of a child node of the current node (the first node) to the child node (for example, the second node) of the current node.

Step ②: The first node determines first positioning information based on the first indication information.

An example in which the first positioning information includes a first offset, a second offset, a first value, and a second value is used to describe a process in which the first node determines the first positioning information.

A start location or an end location of the multicast routing information of the second node may be a reference location. The following uses an example in which the start location of the multicast routing information of the second node is the reference location for description. The foregoing describes different content included in the first multicast routing information in Case 1 and Case 2. Therefore, for the foregoing two cases, manners in which the first node determines the first positioning information are also different. The following provides specific description.

For the foregoing Case 1, the reference location is a start location or an end location of an addressing field in the first multicast packet. For example, the reference location is the end location of the addressing field in the first multicast packet. If in the first multicast packet, 3 bits are used to store an MRID of the first node, and 8 bits are used to store an addressing field of the first node. In this case, the first offset is 3 bits, and the second offset is 1 byte.

For the foregoing Case 2, the reference location is a start location or an end location of the first positioning information in the first multicast packet. For example, the reference location is the end location of the first positioning information in the first multicast packet. In this case, the first offset is 0 bits, and the second offset is 0 bytes.

The first offset or the second offset may be obtained in either manner described in Case 1 or Case 2. The following describes a manner in which the first node obtains the first value and the second value.

The first node obtains the first value and the second value based on the length, of the multicast routing information of the second node, that is indicated by the first indication information. For example, the length of the multicast routing information of the second node is 12 (that is, 1 * 8 + 4) bits. In this case, the second value is 1 byte, and the first value is 4 bits.

Based on the method described above, the first offset, the second offset, the first value, and the second value that are included in the first positioning information may be obtained, to determine the first positioning information.

Step ③: The first node performs packet encapsulation on the first positioning information, the first multicast routing information, and the data, to obtain the first multicast packet.

Based on different manners of determining the first multicast routing information by the first node in step ②, obtained first multicast packets are also different. The following provides separate descriptions.

For Case 1 in step ②, the first node uses the second multicast routing information as the first multicast routing information to form a first-type first multicast packet. FIG. 12 is a diagram of a structure of a first-type first multicast packet according to an embodiment of this application. As shown in FIG. 12, the first multicast packet includes: first positioning information (a first offset, a second offset, a first value, and a second value), first multicast routing information (multicast routing information of a first node and multicast routing information of a fifth node), and data.

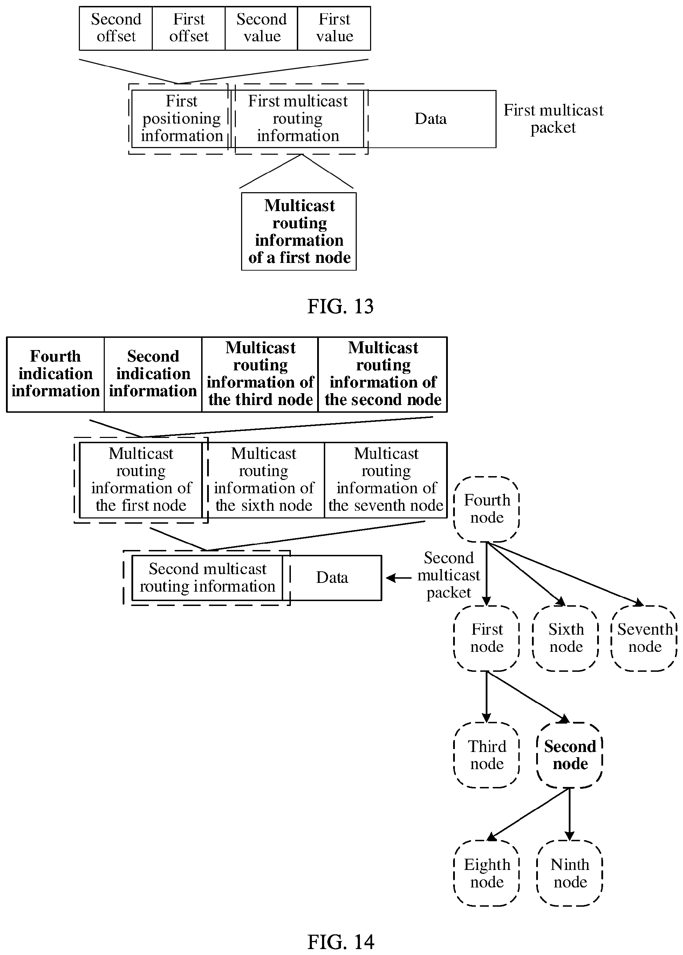

For Case 2 in step ②, the first node obtains the multicast routing information of the first node from the second multicast routing information, to obtain the first multicast routing information. In addition, the first multicast packet is formed based on the first multicast routing information. FIG. 13 is a diagram of a structure of a second-type first multicast packet according to an embodiment of this application. As shown in FIG. 13, the first multicast packet includes: first positioning information (a first offset, a second offset, a first value, and a second value), first multicast routing information (multicast routing information of a first node), and data.

When the multicast routing information of the second node is multicast routing information that is of the initial child node of the first node and that is carried in the second multicast packet, the first node determines the first positioning information based on the first indication information. In this way, the first node quickly obtains the first positioning information based on the length that is of the multicast routing information of the second node and that is indicated by the first indication information. In a case in which the second node needs to obtain multicast routing information of a child node of the second node, the second node may directly obtain the multicast routing information based on the first positioning information, thereby reducing a quantity of times of editing a packet by an editing node, and improving multicast packet forwarding efficiency.

Case B: FIG. 14 is a diagram of a structure of a second-type second multicast packet according to an embodiment of this application. As shown in FIG. 14, a location of multicast routing information of a second node in a second multicast packet is after a location of multicast routing information of a third node in the second multicast packet. In this case, the second node may also be referred to as a last child node of a first node.

Multicast routing information of the first node, which is different from that in Case A, includes: second indication information, fourth indication information, the multicast routing information of the third node, and the multicast routing information of the second node. The second indication information indicates the length of the multicast routing information of the third node. The fourth indication information indicates the total length of the multicast routing information of the first node. The second indication information may be carried in an addressing field of the second multicast packet. The fourth indication information may be carried in a total length field of the second multicast packet.

In this case, a process in which the first node determines a first multicast packet based on the second multicast packet includes the following steps. Step ①: The first node determines first multicast routing information based on second multicast routing information. Step ②: The first node determines first positioning information based on the second indication information and the fourth indication information. Step ③: The first node performs packet encapsulation on the first positioning information, the first multicast routing information, and data, to obtain the first multicast packet.

Methods of step ① and step ③ in Case B are the same as methods of step ① and step ③ in Case A. For related content, refer to the foregoing related descriptions. Details are not described herein again. A difference between this case and Case A lies in step ②, and the process is specifically described as follows.

An example in which the first positioning information includes a first offset, a second offset, a first value, and a second value is still used. The first node obtains, based on the total length that is of the multicast routing information of the first node and that is indicated by the fourth indication information, and the total length that is of the multicast routing information of the third node and that is indicated by the second indication information, the length of the multicast routing information of the second node. The first node obtains the first value and the second value based on the length of the multicast routing information of the second node. Based on Step ①, manners of determining the first multicast routing information are different, and manners of obtaining the length of the multicast routing information of the second node are also different. The following provides separate descriptions.

Case 1: For step ①, the first node determines that the second multicast routing information is the first multicast routing information.

In this case, the first node uses the total length of the multicast routing information of the first node as a minuend, and uses the length of the multicast routing information of the third node, the length occupied by a multicast routing identifier of the first node in the second multicast packet, and the length occupied by an addressing field of the first node in the second multicast packet as subtrahends. A difference obtained through calculation is the length of the multicast routing information of the second node. In addition, the first node obtains the first value and the second value based on the length of the multicast routing information of the second node through the method described in the first possible case.

The first node obtains, based on the length of the multicast routing information of the third node and a location of the multicast routing information of the third node, a start location or an end location of the multicast routing information of the second node. That the location of the multicast routing information of the third node is a start location of the multicast routing information of the third node is used as an example. The first node offsets the start location of the multicast routing information of the third node by the length of the multicast routing information of the third node, to obtain the start location of the multicast routing information of the second node. After obtaining the start location of the multicast routing information of the second node, the first node obtains the first offset and the second offset based on the start location or the end location of the multicast routing information of the second node through the foregoing method for calculating the first offset and the second offset. For a method through which the first node obtains the location of the multicast routing information of the third node, refer to the descriptions of the method through which the first node obtains the location of the multicast routing information of the second node in Case A.

Case 2: For step ①, the first node determines the multicast routing information of the first node from the second multicast routing information, and uses the multicast routing information of the first node as the first multicast routing information.

In this case, the first node uses the total length of the multicast routing information of the first node as a minuend, and uses the length of the multicast routing information of the third node as a subtrahend. A difference obtained through calculation is the length of the multicast routing information of the second node. In addition, the first node obtains the first value and the second value based on the length of the multicast routing information of the second node through the method described in the first possible case. A manner in which the first node obtains the first offset and the second offset is the same as the manner in Case 1, and details are not described herein again.

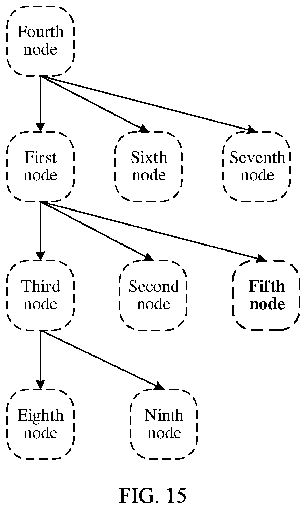

An example in which child nodes of the first node include the second node and the third node is used above to describe a process of obtaining the first multicast packet based on the second multicast packet when the multicast routing information of the second node is carried in different locations in the second multicast packet. In some possible cases, the first node may further include three or more child nodes. FIG. 15 is a diagram of a structure of a second-type multicast tree according to an embodiment of this application. As shown in FIG. 15, a child node of a first node in a multicast tree corresponding to data may further include a fifth node. In this case, multicast routing information of the first node includes: first indication information, second indication information, third indication information, multicast routing information of a third node, multicast routing information of a second node, and multicast routing information of the fifth node. The first indication information indicates the length of the multicast routing information of the second node. The second indication information indicates the length of the multicast routing information of the third node. The third indication information indicates that the first indication information is associated with the multicast routing information of the second node, and the second indication information is associated with the multicast routing information of the third node. The third indication information may be carried in a multicast routing identifier field of a second multicast packet.

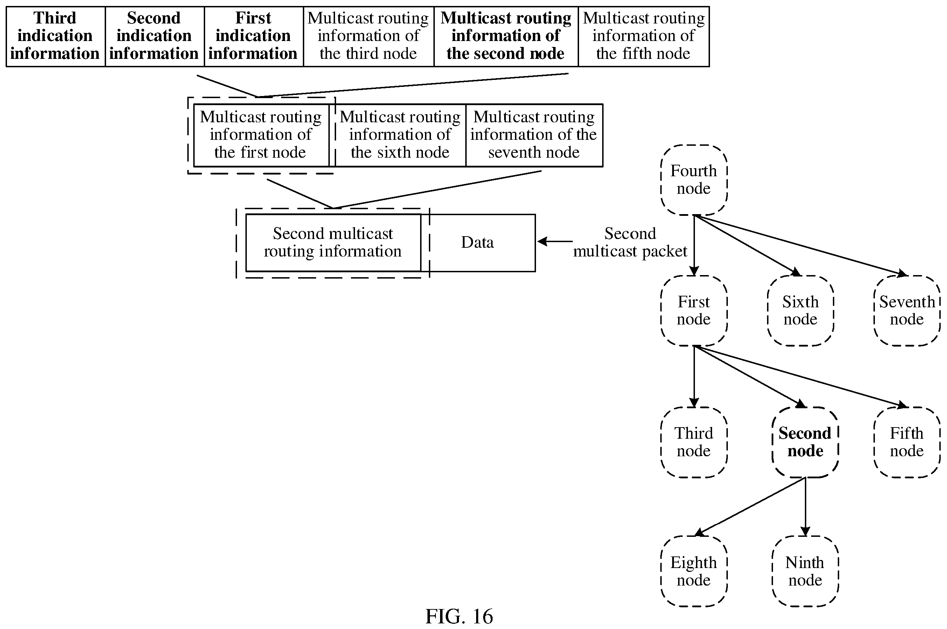

FIG. 16 is a diagram of a structure of a third-type second multicast packet according to this application. As shown in FIG. 16, in a second multicast packet, multicast routing information of a second node is carried before multicast routing information of a fifth node and after multicast routing information of a third node. In this case, the second node may also be referred to as an intermediate child node of a first node. A specific process in which the first node determines a first multicast packet based on the second multicast packet is described as follows.

A process in which the first node determines the first multicast packet based on the second multicast packet includes the following steps. Step ①: The first node determines first multicast routing information based on second multicast routing information. Step ②: The first node determines first positioning information based on first indication information and third indication information. Step ③: The first node performs packet encapsulation on the first positioning information, the first multicast routing information, and data, to obtain the first multicast packet.

Methods of step ① and step ③ in this case are the same as methods of step ① and step ③ in Case B. For related content, refer to the foregoing related descriptions. Details are not described herein again. A difference between this case and Case B lies in step ②, and the process is specifically described as follows.

As included in step ② in this case, a method through which the first node determines the first offset and the second offset is the same as the method through which the first node determines the first offset and the second offset in Case B. As included in step ② in this case, a method through which the first node determines the first value and the second value is different from the manner described in Case B. Specifically, the first node obtains, based on an association that is indicated by the third indication information and that is between the first indication information and the multicast routing information of the second node, and the length that is of the multicast routing information of the second node and that is indicated by the first indication information, the length of the multicast routing information of the second node. After obtaining the multicast routing information of the second node, the first node may obtain the first value and the second value through the method described in Case B.

In a case in which the second node is the intermediate child node of the first node, the first node determines the first positioning information based on the first indication information and the third indication information. In this way, in a case in which the second node needs to obtain multicast routing information of a child node of the second node, the second node may directly obtain the multicast routing information based on the first positioning information, thereby reducing a quantity of times of editing a packet by an editing node, and improving multicast packet forwarding efficiency.

An example in which the first node does not strip multicast routing information of brother nodes (for example, the sixth node and the seventh node) of the first node is used above to describe a process in which the first node determines, based on the second multicast packet, multicast packets sent to child nodes whose multicast routing information is carried in different locations of the second multicast packet. In a case in which the first node strips multicast routing information of brother nodes (for example, the sixth node and the seventh node) of the first node, the first node may also determine, through the foregoing manner and based on the second multicast packet, multicast packets sent to child nodes whose multicast information is carried in different locations of the second multicast packet.

The foregoing describes a case in which the first node encapsulates and forms a multicast packet sent to each child node when the first node includes two child nodes or three child nodes. In some possible examples, the first node may include one child node. In this case, the first node encapsulates and forms a multicast packet sent to the child node in the manner described in the first possible case described above. In some other possible examples, the first node may include four or more child nodes. In this case, the first node uses the foregoing described method for encapsulating and forming multicast packets sent to the initial child node, the intermediate child node, and the last child node of the first node, to encapsulate and form the multicast packet sent to each child node of the first node.

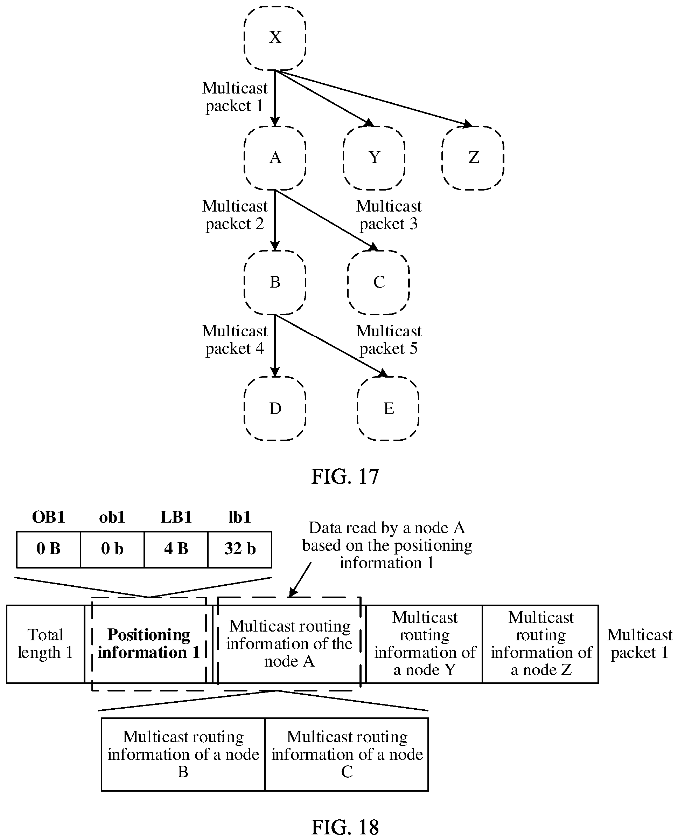

To better understand the method provided in this application, the following describes a multicast packet transmission process by using a diagram of multicast packet forwarding shown in FIG. 17. As shown in FIG. 17, a node A, a node Y, and a node Z are all child nodes of a node X, a node B and a node C are child nodes of the node A, and a node D and a node E are child nodes of the node B. The node X sends a multicast packet 1 to the node A, the node A sends a multicast packet 2 to the node B, the node A sends a multicast packet 3 to the node C, the node B sends a multicast packet 4 to the node D, and the node B sends a multicast packet 5 to the node E. Logic of transmitting the multicast packet 1 by the node X is similar to the foregoing described logic of transmitting the second multicast packet by the fourth node, logic of transmitting the multicast packet 2 by the node A is similar to the foregoing described logic of transmitting the first multicast packet by the first node, and logic of transmitting the multicast packet 3 by the node A is similar to the foregoing described logic of transmitting the third multicast packet by the first node. Based on whether a parent node sends multicast routing information of a brother node of the parent node to a child node of the parent node, the following two cases are separately described.

Case 1: The node does not strip the multicast routing information of the brother node of the node, and directly sends multicast routing information of the node and the multicast routing information of the brother node of the node to the child node of the node.

FIG. 18 is a diagram of an example of a first-type multicast packet according to an embodiment of this application. As shown in FIG. 18, a multicast packet 1 includes: the total length 1 of multicast routing information of a node A, positioning information 1, the multicast routing information of the node A, multicast routing information of a node Y, and multicast routing information of a node Z. The positioning information 1 is for determining the multicast routing information of the node A, and content and values thereof included in the positioning information 1 are: OB1 = 0, ob1 = 0, LB1 = 4 bytes, and lb1 = 32 bits.

A process in which the node A obtains a multicast packet 2 based on the multicast packet 1 includes the following (1) to (3).

### (1) The node A obtains the multicast routing information of the node A.

The node A obtains the multicast routing information of the node A based on the positioning information 1. The node A reads, from a location indicated by OB1, content whose length is 4 bytes in the multicast packet 1, and the node A is offset, to a location indicated by ob1, from the location indicated by OB1, and reads 32-bit content from 4-byte content that is read, where the 32-bit content is the multicast routing information of the node A. The multicast routing information of the node A includes: MRID_A (011), an addressing field (L_B = 12 bits), multicast routing information of a node B and multicast routing information of a node C, and content of 3 bits occupied by MRID_A (011) in the multicast routing information of the node A, and content of 8 bits occupied by the addressing field (L_B = 12 bits) in the multicast routing information of the node A.

### (2) The node A determines the total length 2.

The node A determines, based on a 2^{nd} bit of MRID_A (011) and the length that is of the multicast routing information of the node B and that is indicated by the addressing field (L_B = 12 bits), that the total length 2 of the multicast routing information of the node B is 12 bits.

### (3) The node A determines positioning information 2.

The node A determines that an end location of the addressing field is a start location of the multicast routing information of the node B. MRID_A (011) occupies 3 bits, and the addressing field (L_B = 12 bits) occupies 8 bits. MRID_A (011) and the addressing field (L_B = 12 bits) occupy 11 bits in total, and 11 bits may be divided into 1 byte and 3 bits, that is, OB2 = 1 byte, and ob2 = 3 bits. The node A determines LB2 and lb2 based on the addressing field (L_B = 12 bits). Specifically, the addressing field (L_B = 12 bits) is 12 bits, and 12 bits are less than 2 bytes, that is, LB2 = 2 bytes, and lb2 = 12 bits.

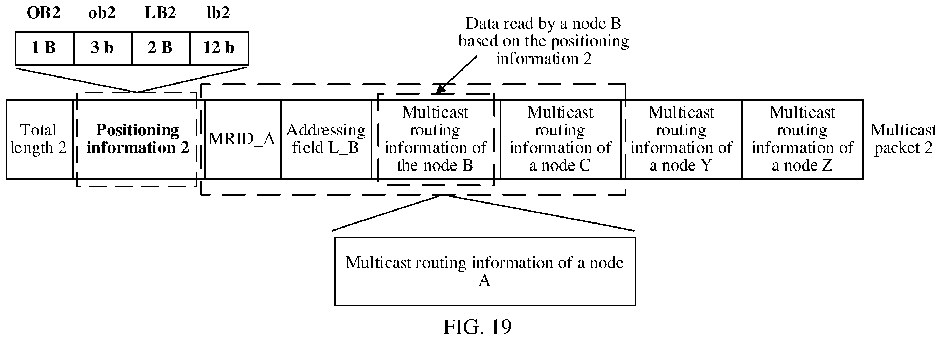

FIG. 19 is a diagram of an example of a second-type multicast packet according to an embodiment of this application. As shown in FIG. 19, a multicast packet 2 includes: the total length 2 of multicast routing information of a node B (12 bits), positioning information 2 (OB2 = 1 byte, ob2 = 3 bits, LB2 = 2 bytes, and lb2 = 12 bits), multicast routing information of a node A, multicast routing information of a node Y, and multicast routing information of a node Z.

A process in which the node A obtains a multicast packet 3 based on a multicast packet 1 includes the following (1) to (3).
(1) herein is the same as (1) in the process in which the node A obtains the multicast packet 2 based on the multicast packet 1, and details are not described herein again.
(2) The node A determines the total length 3.

The node A determines the total length 3 of multicast routing information of a node C based on the total length 1 (32 bits), a quantity of bits occupied by MRID_A (011), a quantity of bits occupied by an addressing field (L_B = 12 bits), and the length of the multicast routing information of the node B (L_B = 12 bits). Details are as follows: Total length 1 (32 bits) - Quantity of bits occupied by MRID_A (011) (3 bits) - Quantity of bits occupied by the addressing field (L_B = 12 bits) (8 bits) - Length of the multicast routing information of the node B (12 bits) = Total length 3 (9 bits).

(3) The node A determines positioning information 3.

The node A determines that an end location of the multicast routing information of the node B is a start location of the multicast routing information of the node C. Based on the quantity of bits occupied by MRID_A (011) (3 bits), the quantity of bits occupied by the addressing field (L_B = 12 bits) (8 bits), and the length of the multicast routing information of the node B (L_B = 12 bits), the end location of the multicast routing information of the node B is calculated as follows: 23 (3 + 8 + 12) bits, that is, OB3 = 2 bytes, and ob3 = 7 bits. The total length of the multicast routing information of the node C is 9 bits, that is, LB3 = 2 bytes, and lb3 = 9 bits.

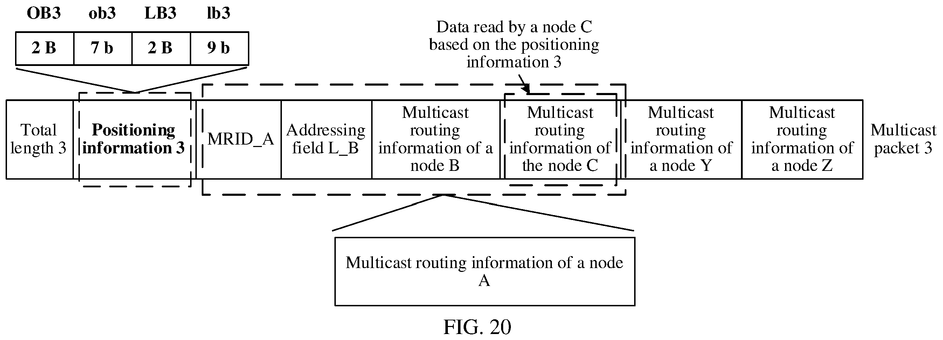

FIG. 20 is a diagram of an example of a third-type multicast packet according to an embodiment of this application. As shown in FIG. 20, a multicast packet 3 includes: the total length 3 of multicast routing information of a node C (9 bits), positioning information 3 (OB3 = 2 bytes, ob3 = 7 bits, LB3 = 2 bytes, and lb3 = 9 bits), multicast routing information of a node A, multicast routing information of a node Y, and multicast routing information of a node Z.

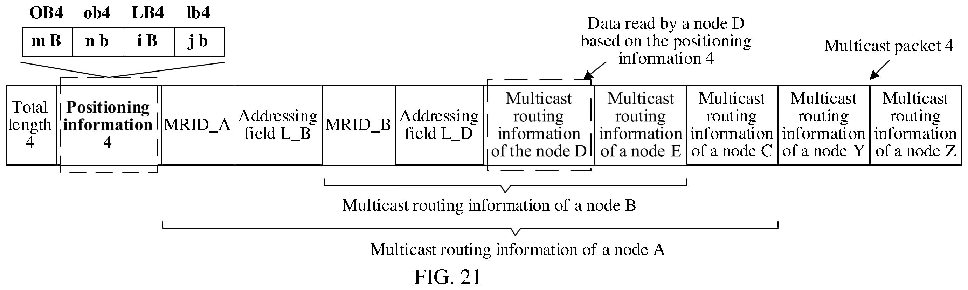

The node B may obtain, based on the multicast packet 2 and through the method described above, a multicast packet 4 sent to a node D. FIG. 21 is a diagram of an example of a fourth-type multicast packet according to an embodiment of this application. As shown in FIG. 21, a multicast packet 4 includes: the total length 4 of multicast routing information of a node D, positioning information 4, multicast routing information of a node A, multicast routing information of a node Y, and multicast routing information of a node Z.

Case 2: The node strips the multicast routing information of the brother node of the node, and an MRID and an addressing address of the node, and sends multicast routing information of the node to the child node thereof.

A process in which a node A obtains, based on the multicast packet 1, a multicast packet 2 based on a multicast packet 1 includes: The node A obtains multicast routing information and the total length 2 that are of the node A, and positioning information 2. In Case 2, a process in which the node A obtains, based on the multicast packet 1, the multicast routing information and the total length 2 that are of the node A is the same as that in the case. For related content, refer to the foregoing descriptions. Details are not described herein again. A difference between Case 2 and Case 1 is a process in which the node A determines the positioning information 2. The process is specifically described as follows.

The node A determines that an end location of positioning information 1 is a start location of multicast routing information of a node B, where OB2 = 0 bytes, and ob2 = 0 bits. The node A obtains LB2 and lb2 based on an addressing field (L_B = 12 bits). The addressing field (L_B = 12 bits) has 12 bits, and 12 bits are less than 2 bytes, that is, LB2 = 2 bytes, and lb2 = 12 bits.

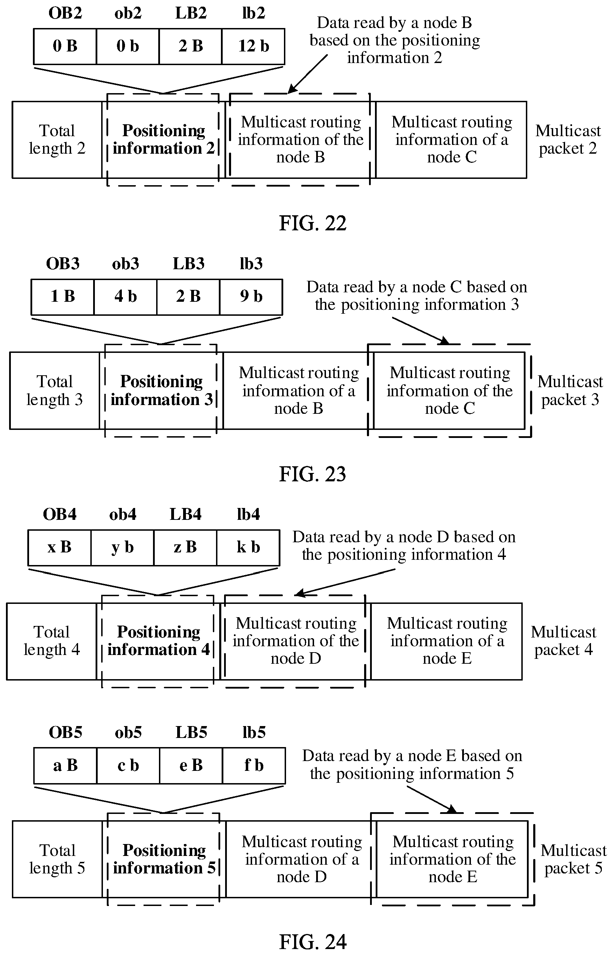

FIG. 22 is a diagram of an example of a fifth-type multicast packet according to an embodiment of this application. As shown in FIG. 22, a multicast packet 2 includes: the total length 2 of multicast routing information of a node B (12 bits), positioning information 2 (OB2 = 0 bytes, ob2 = 0 bits, LB2 = 2 bytes, and lb2 = 12 bits), the multicast routing information of the node B, and multicast routing information of a node C.

A process in which the node A obtains, based on the multicast packet 1, a multicast packet 3 based on the multicast packet 1 includes: The node A obtains the multicast routing information and the total length 3 that are of the node A, and positioning information 3. In Case 2, a process in which the node A obtains, based on the multicast packet 1, the multicast routing information and the total length 3 that are of the node A is the same as that in the case. For related content, refer to the foregoing descriptions. Details are not described herein again. A difference between Case 2 and Case 1 is a process in which the node A determines the positioning information 3. The process is specifically described as follows.

The node A determines that an end location of the multicast routing information of the node B is a start location of the multicast routing information of the node C. The length of the multicast routing information of the node B is 12 bits, that is, OB3 = 1 byte, and ob3 = 4 bits. The node A obtains LB3 and lb3 based on the length of the multicast routing information of the node C (L_C = 9 bits). The length of the multicast routing information of the node C (L_C = 9 bits) is 9 bits, and 9 bits are less than 2 bytes, that is, LB3 = 2 bytes, and lb3 = 9 bits.

FIG. 23 is a diagram of an example of a sixth-type multicast packet according to an embodiment of this application. As shown in FIG. 23, a multicast packet 3 includes: the total length 3 of multicast routing information of a node C (9 bits), positioning information 3 (OB3 = 1 byte, ob3 = 4 bits, LB3 = 2 bytes, and lb3 = 9 bits), multicast routing information of a node B, and the multicast routing information of the node C.

The node B may separately obtain, based on the multicast packet 2 through the method described above, a multicast packet 4 sent to a node D and a multicast packet 5 sent to a node E. FIG. 24 is a diagram of an example of a seventh-type multicast packet according to an embodiment of this application. As shown in FIG. 24, a multicast packet 4 includes: the total length 4 of multicast routing information of a node D, positioning information 4, the multicast routing information of the node D, and multicast routing information of a node E. A multicast packet 5 includes: the total length 5 of the multicast routing information of the node E, positioning information 5, the multicast routing information of the node D, and the multicast routing information of the node E.

S820: The first node sends the first multicast packet to the second node.

The first positioning information is for determining the multicast routing information of the second node from the first multicast routing information. The second node and the third node are the child nodes of the first node in the multicast tree, and the second node is different from the third node.

In a possible case, a destination address in unicast encapsulation in the first multicast packet is an address of the second node. Specifically, the first multicast packet may be an IP packet. In this case, a destination address in the first multicast packet is the address of the second node, the first multicast packet further includes the data, and the multicast information of the second node in the first multicast packet is located between an IP header and the data of the first multicast packet. The unicast encapsulation may include an indication field. The indication field indicates whether information obtained through unicast encapsulation in a multicast packet includes multicast information. When receiving the multicast packet, a node or an entity may determine, based on the indication field, whether the information obtained through the unicast encapsulation in the multicast packet includes the multicast information. For example, if the unicast encapsulation is IPv4 encapsulation, a "protocol (protocol)" field in an IPv4 header may indicate whether the information obtained through the unicast encapsulation in the multicast packet includes the multicast information. If the unicast encapsulation is IPv6 encapsulation, a "next header (Next Header)" field in an IPv6 header may indicate whether the information obtained through the unicast encapsulation in the multicast packet includes the multicast information.

In embodiments of this application, a source address in unicast encapsulation in a multicast packet sent by a node (for example, a node a) to another node (for example, a node b) may be an address of the node a, or may be an address of a source node in a multicast tree. For example, based on the example shown in FIG. 2, a source address in unicast encapsulation in a multicast packet sent by the node R to the node S may be an address of the node R, or may be an address of the node B. A source address in unicast encapsulation in a multicast packet sent by the node S to the node D may be an address of the node S, or may be the address of the node B.

In some possible cases, when the multicast packet in embodiments of this application does not include unicast encapsulation, a node may determine a next-hop node of the multicast packet through a multicast routing identifier in the multicast packet. For example, the node receives the multicast packet. When the multicast routing identifier of the node is a bit sequence (for example, 011), a node corresponding to a bit whose value is 1 in the multicast routing identifier is a next-hop node of the multicast packet, that is, a child node of the node is the next-hop node of the multicast packet.

In a possible case, the first node may further determine a third multicast packet based on the second multicast packet, and send the third multicast packet to the third node. The third multicast packet includes third positioning information, the first multicast routing information, and the data. The third positioning information is for determining the multicast routing information of the third node from the first multicast routing information. A method for determining the third multicast packet by the first node is similar to the method for determining the first multicast packet. A difference lies in that the third positioning information included in the third multicast packet is determined by the first node based on the multicast routing information of the third node included in the first multicast routing information. A method for determining the third positioning information by the first node based on the multicast routing information of the third node is similar to the method for determining the first positioning information by the first node based on positioning information of the second node, and details are not described herein again.

Compared with a method in which the first node splits the first multicast routing information to separately obtain the multicast routing information of the second node and the multicast routing information of the third node, sends the multicast routing information of the second node to the second node, and sends the multicast routing information of the third node to the third node, in the method in embodiments of this application, the first node directly sends the first multicast routing information to the second node and the third node, and the second node determines the multicast routing information of the second node from the first multicast routing information based on the first positioning information. In this way, the first multicast routing information is not split from the first node, a quantity of times that the first node edits the packet is reduced, and packet forwarding performance is improved.

The foregoing mainly describes the solutions in embodiments of this application from a perspective of the method. It may be understood that to implement the foregoing functions, each network element, for example, a node or an entity, includes at least one of a corresponding hardware structure and a corresponding software module for executing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation is outside of the scope of this application.

In embodiments of this application, the nodes or entities may be divided into functional units based on the foregoing method examples. For example, each functional unit may be obtained through division based on each corresponding function, or two or more functions may be integrated into one processing unit. The foregoing integrated unit may be implemented in a form of hardware, or may be implemented in a form of a software functional unit. Division into units in embodiments of this application is an example, and is merely logical function division. During actual implementation, there may be another division manner.

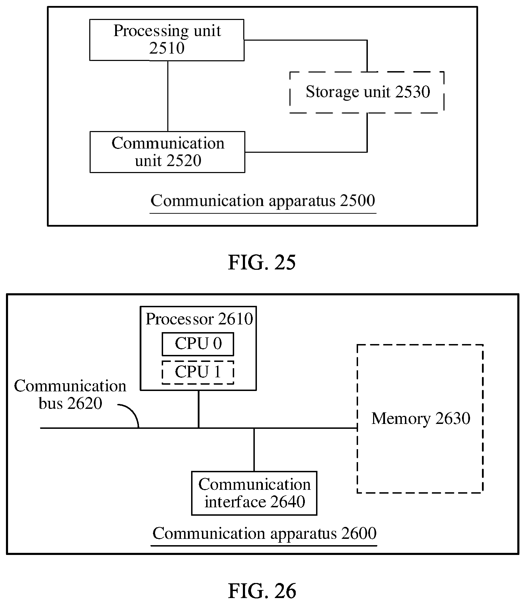

FIG. 25 is a diagram of a structure of a communication apparatus according to an embodiment of this application. As shown in FIG. 25, the communication apparatus 2500 includes a processing unit 2510 and a communication unit 2520. In some possible examples, the communication apparatus 2500 may further include a storage unit 2530. The communication apparatus 2500 may be configured to indicate a structure of a node or an entity in the foregoing embodiments.

When the diagram of the structure shown in FIG. 25 indicates a structure of the first node in the foregoing embodiments, the processing unit 2510 is configured to control and manage an action of the first node. For example, the processing unit 2510 is configured to perform 810 and 820 in FIG. 8 and/or an action performed by the first node in another process described in embodiments of this application. The processing unit 2510 may communicate with another node or entity through the communication unit 2520, for example, communicate with the second node in FIG. 8. The storage unit 2530 is configured to store program code and data of the first node.

When the diagram of the structure shown in FIG. 25 indicates a structure of the second node in the foregoing embodiments, the processing unit 2510 is configured to control and manage an action of the second node. For example, the processing unit 2510 is configured to perform 820 in FIG. 8 and/or an action performed by the second node in another process described in embodiments of this application. The processing unit 2510 may communicate with another node or entity through the communication unit 2520, for example, communicate with the first node in FIG. 8. The storage unit 2530 is configured to store program code and data of the second node.

When the diagram of the structure shown in FIG. 25 indicates a structure of another node or entity in the foregoing embodiments, the processing unit 2510 is configured to control and manage an action of the node or the entity, and the node or the entity is configured to perform an action performed by the node or the entity in a process described in embodiments of this application.

For example, the communication apparatus 2500 may be a device, or may be a chip or a chip system.

When the communication apparatus 2500 is a device, the processing unit 2510 may be a processor, and the communication unit 2520 may be a communication interface, a transceiver, or an input interface and/or an output interface. Optionally, the transceiver may be a transceiver circuit. Optionally, the input interface may be an input circuit, and the output interface may be an output circuit.

When the communication apparatus 2500 is a chip or a chip system, the processing unit 2510 may be a processor, a processing circuit, a logic circuit, or the like. The communication unit 2520 may be a communication interface, an input interface and/or an output interface, an interface circuit, an output circuit, an input circuit, a pin, a related circuit, or the like on the chip or the chip system.

When an integrated unit in FIG. 25 is implemented in a form of a software functional module and sold or used as an independent product, the integrated unit may be stored in a computer-readable storage medium. Based on such an understanding, the technical solutions in embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to perform all or some steps of the methods described in embodiments of this application. The storage medium for storing the computer software product includes any medium that can store program code, for example, a USB flash drive, a removable hard disk, a read-only memory (read-only memory, ROM), a random access memory (random access memory, RAM), a magnetic disk, or an optical disc.

When the processing unit 2510 is a processor, the communication unit 2520 is a communication interface, and the storage unit 2530 is a memory, the communication apparatus in embodiments of this application may be a communication apparatus 2600 shown in FIG. 26.

FIG. 26 is a diagram of a hardware structure of a communication apparatus according to an embodiment of this application. As shown in FIG. 26, the communication apparatus may be a node or an entity in this specification. The communication apparatus 2600 includes at least one processor 2610, a communication bus 2620, and at least one communication interface 2640. Optionally, a memory 2630 is further included. FIG. 26 is drawn by using an example in which the communication apparatus 2600 includes one processor 2610 and one communication interface 2640.

The processor 2610, the communication interface 2640, and the memory 2630 may be connected through the communication bus 2620 to implement mutual communication and transfer a control signal and/or a data signal. The memory 2630 is configured to store a computer program. The processor 2610 is configured to invoke the computer program from the memory 2630 and run the computer program, to control the communication interface 2640 to receive and send a signal.

In a first possible implementation, the processor 2610 may be a general-purpose central processing unit (central processing unit, CPU), a microprocessor, an application-specific integrated circuit (application-specific integrated circuit, ASIC), or one or more integrated circuits configured to control execution of programs in the solutions of this application. The communication interface 2640 may be any apparatus of a transceiver type.

In a second possible implementation, the processor 2610 may be a logic circuit, and the communication interface 2640 may include an input interface and/or an output interface.

The communication interface 2640 is configured to communicate with another device or communication network through any apparatus of a transceiver type.

The memory 2630 may be a ROM or another type of static storage device that can store static information and instructions, or a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a blue optical disc, and the like), a magnetic disk storage medium or another magnetic storage device, or any other medium that can carry or store expected program code in a form of an instruction structure or a data structure and can be accessed by a computer. However, this is not limited herein. The memory may exist independently, and is connected to the processor through the communication bus 2620. The memory may alternatively be integrated with the processor.

The memory 2630 is configured to store computer-executable instructions for executing the solutions of this application, and the processor 2610 controls execution. The processor 2610 is configured to execute the computer-executable instructions stored in the memory 2630, to implement the methods provided in the following embodiments of this application.

Optionally, the computer-executable instructions in embodiments of this application may also be referred to as application program code. This is not specifically limited in embodiments of this application.

When the diagram of the structure shown in FIG. 26 indicates a structure of the first node in the foregoing embodiments, the processor 2610 is configured to control and manage an action of the first node. For example, the processor 2610 is configured to perform 810 and 820 in FIG. 8 and/or an action performed by the first node in another process described in embodiments of this application. The processor 2610 may communicate with another node or entity through the communication interface 2640, for example, communicate with the second node in FIG. 8. The memory 2630 is configured to store program code and data of the first node.

When the diagram of the structure shown in FIG. 26 indicates a structure of the second node in the foregoing embodiments, the processor 2610 is configured to control and manage an action of the second node. For example, the processor 2610 is configured to perform 820 in FIG. 8 and/or an action performed by the second node in another process described in embodiments of this application. The processor 2610 may communicate with another node or entity through the communication interface 2640, for example, communicate with the first node in FIG. 8. The memory 2630 is configured to store program code and data of the second node.

When the diagram of the structure shown in FIG. 26 indicates a structure of another node or entity in the foregoing embodiments, the processor 2610 is configured to control and manage an action of the node or the entity, and the node or the entity is configured to perform an action performed by the node or the entity in a process described in embodiments of this application.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product is run on a computer, the computer is enabled to perform any one of the foregoing methods.

An embodiment of this application further provides a communication system. The communication system includes one or more nodes in the foregoing embodiments, or the communication system includes one or more entities in the foregoing embodiments, or the communication system includes one or more nodes and one or more entities in the foregoing embodiments.

All or a part of the foregoing embodiments may be implemented by software, hardware, firmware, or any combination thereof. When a software program is used for implementation, all or a part of embodiments may be implemented in a form of a computer program product. The computer program product includes one or more computer instructions. When computer-executable instructions are loaded and executed on a computer, all or a part of the procedures or functions according to embodiments of this application are generated. The computer may be a general-purpose computer, a dedicated computer, a computer network, or other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies of this application.

## Claims

1. A multicast packet transmission method, wherein the method is applied to a first node, and the method comprises:
determining a first multicast packet, wherein the first multicast packet comprises first positioning information, first multicast routing information, and data; the first multicast routing information comprises multicast routing information of a second node and multicast routing information of a third node, the multicast routing information of the second node indicates a descendant node of the second node in a multicast tree corresponding to the data, and the multicast routing information of the third node indicates a descendant node of the third node in the multicast tree; and
sending the first multicast packet to the second node, wherein the first positioning information is for determining the multicast routing information of the second node from the first multicast routing information, the second node and the third node are child nodes of the first node in the multicast tree, and the second node is different from the third node.

2. The method according to claim 1, wherein the method further comprises:
receiving a second multicast packet from a fourth node, wherein the second multicast packet comprises second multicast routing information and the data; the second multicast routing information comprises multicast routing information of the first node, the multicast routing information of the first node comprises the multicast routing information of the second node and the multicast routing information of the third node, and the first node is a child node of the fourth node in the multicast tree; and
the determining the first multicast packet comprises:
determining the first multicast packet based on the second multicast packet.

3. The method according to claim 2, wherein the second multicast packet further comprises second positioning information, and the second positioning information is for determining the multicast routing information of the first node from the second multicast routing information.

4. The method according to claim 2 or 3, wherein the multicast routing information of the first node further comprises first indication information, and the first indication information indicates a length of the multicast routing information of the second node; and
the determining the first multicast packet based on the second multicast packet comprises:
determining the first positioning information based on the first indication information;
determining the first multicast routing information based on the second multicast routing information; and
performing packet encapsulation on the first positioning information, the first multicast routing information, and the data, to obtain the first multicast packet.

5. The method according to claim 4, wherein the multicast routing information of the first node further comprises second indication information and third indication information, the second indication information indicates a length of the multicast routing information of the third node, the third indication information indicates that the first indication information is associated with the multicast routing information of the second node, and the second indication information is associated with the multicast routing information of the third node; and
the determining the first positioning information based on the first indication information comprises:
determining the first positioning information based on the first indication information and the third indication information.

6. The method according to claim 2 or 3, wherein the multicast routing information of the first node further comprises second indication information and fourth indication information, the second indication information indicates a length of the multicast routing information of the third node, and the fourth indication information indicates a total length of the multicast routing information of the first node; and
the determining the first multicast packet based on the second multicast packet comprises:
determining the first positioning information based on the second indication information and the fourth indication information;
determining the first multicast routing information based on the second multicast routing information; and
performing packet encapsulation on the first positioning information, the first multicast routing information, and the data, to obtain the first multicast packet.

7. The method according to claim 4 or 5, wherein
the determining the first multicast routing information based on the second multicast routing information comprises:
using the second multicast routing information as the first multicast routing information; or
obtaining the multicast routing information of the first node from the second multicast routing information, to obtain the first multicast routing information.

8. The method according to any one of claims 4 to 7, wherein the first positioning information comprises first length information, and the first length information indicates the length of the multicast routing information of the second node.

9. The method according to claim 8, wherein
the first length information comprises a first value, and the first value is the length of the multicast routing information of the second node; or
the first length information comprises a first value and a second value, the first value and the second value jointly represent the length of the multicast routing information of the second node, and a unit length corresponding to the first value is different from a unit length corresponding to the second value.

10. The method according to claim 8 or 9, wherein the first positioning information further comprises first location information, and the first location information indicates a location of the multicast routing information of the second node in the first multicast packet.

11. The method according to claim 10, wherein
the first location information comprises a first offset, and the first offset is an offset of the location of the multicast routing information of the second node in the first multicast packet relative to a reference location in the first multicast packet; or
the first location information comprises a first offset and a second offset, the first offset is an offset of a location of a first field in the first multicast packet relative to a reference location in the first multicast packet, the second offset is an offset of the location of the multicast routing information of the second node in the first multicast packet relative to the location of the first field in the first multicast packet, and the first field is a field that is among a plurality of fields obtained by dividing the first multicast packet by a first unit length and that the location of the multicast routing information of the second node is in.

12. A first node, comprising a processing unit and a communication unit, wherein
the processing unit is configured to determine a first multicast packet, wherein the first multicast packet comprises first positioning information, first multicast routing information, and data; the first multicast routing information comprises multicast routing information of a second node and multicast routing information of a third node, the multicast routing information of the second node indicates a descendant node of the second node in a multicast tree corresponding to the data, and the multicast routing information of the third node indicates a descendant node of the third node in the multicast tree; and
the communication unit is configured to send the first multicast packet to the second node, wherein the first positioning information is for determining the multicast routing information of the second node from the first multicast routing information, the second node and the third node are child nodes of the first node in the multicast tree, and the second node is different from the third node.

13. The first node according to claim 12, wherein
the communication unit is further configured to receive a second multicast packet from a fourth node, wherein the second multicast packet comprises second multicast routing information and the data; the second multicast routing information comprises multicast routing information of the first node, the multicast routing information of the first node comprises the multicast routing information of the second node and the multicast routing information of the third node, and the first node is a child node of the fourth node in the multicast tree; and
the processing unit is specifically configured to determine the first multicast packet based on the second multicast packet.

14. The first node according to claim 13, wherein the second multicast packet further comprises second positioning information, and the second positioning information is for determining the multicast routing information of the first node from the second multicast routing information.

15. The first node according to claim 13 or 14, wherein the multicast routing information of the first node further comprises first indication information, and the first indication information indicates a length of the multicast routing information of the second node;
the processing unit is specifically configured to determine the first positioning information based on the first indication information;
the processing unit is further specifically configured to determine the first multicast routing information based on the second multicast routing information; and
the processing unit is further specifically configured to perform packet encapsulation on the first positioning information, the first multicast routing information, and the data, to obtain the first multicast packet.

16. The first node according to claim 15, wherein the multicast routing information of the first node further comprises second indication information and third indication information, the second indication information indicates a length of the multicast routing information of the third node, the third indication information indicates that the first indication information is associated with the multicast routing information of the second node, and the second indication information is associated with the multicast routing information of the third node; and
the processing unit is specifically configured to determine the first positioning information based on the first indication information and the third indication information.

17. The first node according to claim 13 or 14, wherein the multicast routing information of the first node further comprises second indication information and fourth indication information, the second indication information indicates a length of the multicast routing information of the third node, and the fourth indication information indicates a total length of the multicast routing information of the first node;
the processing unit is specifically configured to determine the first positioning information based on the second indication information and the fourth indication information;
the processing unit is further specifically configured to determine the first multicast routing information based on the second multicast routing information; and
the processing unit is further specifically configured to perform packet encapsulation on the first positioning information, the first multicast routing information, and the data, to obtain the first multicast packet.

18. The first node according to claim 15 or 16, wherein
the processing unit is specifically configured to: use the second multicast routing information as the first multicast routing information; or
obtain the multicast routing information of the first node from the second multicast routing information, to obtain the first multicast routing information.

19. The first node according to any one of claims 15 to 18, wherein the first positioning information comprises first length information, and the first length information indicates the length of the multicast routing information of the second node.

20. The first node according to claim 19, wherein
the first length information comprises a first value, and the first value is the length of the multicast routing information of the second node; or
the first length information comprises a first value and a second value, the first value and the second value jointly represent the length of the multicast routing information of the second node, and a unit length corresponding to the first value is different from a unit length corresponding to the second value.

21. The first node according to claim 19 or 20, wherein the first positioning information further comprises first location information, and the first location information indicates a location of the multicast routing information of the second node in the first multicast packet.

22. The first node according to claim 21, wherein
the first location information comprises a first offset, and the first offset is an offset of the location of the multicast routing information of the second node in the first multicast packet relative to a reference location in the first multicast packet; or
the first location information comprises a first offset and a second offset, the first offset is an offset of a location of a first field in the first multicast packet relative to a reference location in the first multicast packet, the second offset is an offset of the location of the multicast routing information of the second node in the first multicast packet relative to the location of the first field in the first multicast packet, and the first field is a field that is among a plurality of fields obtained by dividing the first multicast packet by a first unit length and that the location of the multicast routing information of the second node is in.

23. A communication apparatus, wherein the communication apparatus comprises a processor; and
the processor is connected to a memory, the memory is configured to store computer-executable instructions, and the processor executes the computer-executable instructions stored in the memory, to enable the communication apparatus to implement the method according to any one of claims 1 to 11.

24. A computer-readable storage medium, wherein the computer-readable storage medium comprises instructions, and when the instructions are run on a computer, the computer is enabled to perform the method according to any one of claims 1 to 11.
